(19) **Europäisches Patentamt**

**European Patent Office**

**Office européen des brevets**

(11) **EP 1 529 636 B1**

(12) **EUROPÄISCHE PATENTSCHRIFT**

(45) Veröffentlichungstag und Bekanntmachung des Hinweises auf die Patenterteilung:
**15.11.2006 Patentblatt 2006/46**

(51) Int Cl.:
***B32B 27/36*** *(2006.01)*

(21) Anmeldenummer: **04025892.3**

(22) Anmeldetag: **02.11.2004**

(54) **Weisse, heisssiegelbare, peelfähige Polyesterfolie, Verfahren zu ihrer Herstellung und ihre Verwendung**

White, heat sealable and peelable polyester film, process of producing the same and its use

Film blanc en polyester, thermoscellable et pelable, son procédé de préparation et son utilisation

(84) Benannte Vertragsstaaten:
**DE FR GB IT LU**

(30) Priorität: **10.11.2003 DE 10352432**

(43) Veröffentlichungstag der Anmeldung:
**11.05.2005 Patentblatt 2005/19**

(73) Patentinhaber: **Mitsubishi Polyester Film GmbH**
**65203 Wiesbaden (DE)**

(72) Erfinder:
• **Pfeiffer, Herbert, Dr. Professor**
**55126 Mainz (DE)**
• **Janssens, Bart, Dr.**
**65189 Wiesbaden (DE)**
• **Hilkert, Gottfried, Dr.**
**55291 Saulheim (DE)**
• **Brömmel, Paul**
**55129 Mainz (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**EP-A- 0 379 190       WO-A-02/059186**
**WO-A-03/026892**

**Beschreibung**

Die Erfindung betrifft eine weiße, coextrudierte, peelfähige und biaxial orientierte Polyesterfolie mit einer weißen Basisschicht (B) und mindestens einer auf dieser Basisschicht (B) aufgebrachten Deckschicht (A). Die Deckschicht (A) ist heißsiegelbar und zeichnet sich durch eine leichte bis feste Peelbarkeit, insbesondere zu PET-Menüschalen aus. Die heißsiegelbare und peelfähige Deckschicht (A) enthält Polyester auf Basis von aromatischen und aliphatischen Säuren und aliphatischen Diolen. Des Weiteren enthält die Deckschicht (A) Partikel. Die Erfindung betrifft weiterhin ein Verfahren zur Herstellung der Folie und ihre Verwendung.

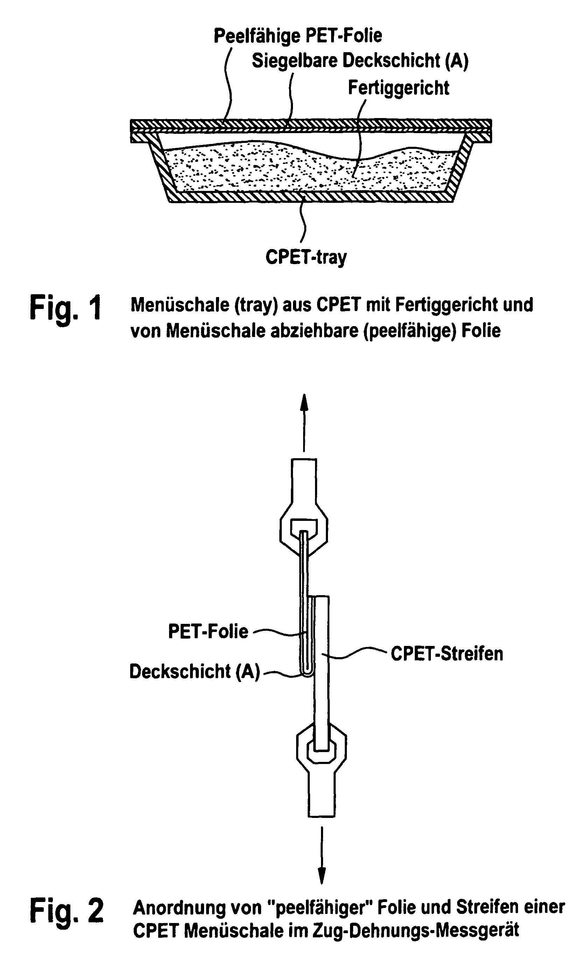

Für Fertiggerichte (engl. ready-prepared meals) sind in Europa die Zuwachsraten derzeit zweistellig. Die Fertiggerichte werden nach ihrer Zubereitung in Menüschalen (engl. trays) eingefüllt (vgl. Figur 1). Auf den Rand der Menüschale wird eine Folie heißgesiegelt, die die Verpackung verschließt und das Fertiggericht gegen äußere Einflüsse schützt. Die Fertiggerichte sind z. B. für die Erhitzung in der Mikrowelle, für die Erhitzung im Backofen oder für die Erhitzung in der Mikrowelle und im Backofen geeignet. Im letztgenannten Fall muss das Fertiggericht und die Verpackung "dual ovenable" (= Mikrowellen- und Backofen fähig) sein. Auf Grund der im Backofen vorherrschenden Temperaturen (bis 220 °C) werden an das Verpackungsmaterial (Menüschale und Deckelfolie) besonders hohe Anforderungen gestellt.

Sowohl für die Menüschale als auch für die Deckelfolie kommen für "dual ovenable"-Anwendungen nur ausgewählte Materialien in Frage. Typische Materialien für die Menüschalen sind in diesem Fall CPET, Aluminium, mit PET oder mit PET-Folie beschichteter Karton. Bei Menüschalen aus CPET (vgl. Figur 1) liefert die dicke kristalline und meist pigmentierte, d. h. mit Partikeln gefüllte, CPET-Folie die Stabilität der Schale, auch bei den vergleichsweise hohen Temperaturen im Backofen. Menüschalen aus APET/CPET bestehen außen aus einer CPET-Schicht und innen, d. h. zum Fertigmenü hin, aus einer APET-Schicht. Das amorphe PET verbessert im Wesentlichen die Haftung der Folie auf der Menüschale. PET=Polyethylenterephthalat, APET = amorphes PET, CPET = kristallines PET.

Bei "dual ovenable"-Anwendungen wird für die Deckelfolie in der Regel PET verwendet, das selbst bei 220 °C formstabil und fest genug ist. Materialien wie PP oder PE scheiden hier wegen ihrer niedrigen Schmelzpunkte von vornherein aus. Die Anforderungen an die Deckelfolie werden am besten von biaxial orientierter Polyesterfolie erfüllt.

Bei der Zubereitung des Fertiggerichtes im Ofen wird die Polyesterfolie kurz vor der Erhitzung oder kurz nach der Erhitzung von der Menüschale mit der Hand abgezogen. Hierbei darf die Polyesterfolie auf keinen Fall ein- bzw. ein- und weiter- oder abreißen. Das Abziehen der Folie von der Menüschale, ohne dass dabei die Folie ein-, weiter- oder abreißt, wird in der Lebensmittelbranche auch mit "Peelen" bezeichnet. Für diese Anwendung muss die Polyesterfolie daher nicht nur heißsiegelbar, sondern insbesondere auch peelfähig sein. Bei vorgegebenem Material und vorgegebener Gesamtdicke der Folie wird die Peelfähigkeit der Folie hauptsächlich von den Eigenschaften der Oberflächenschicht der Folie, die auf die Menüschale gesiegelt ist, bestimmt.

Die Peelfähigkeit von Folien lässt sich labormäßig relativ einfach mit einem Spannungs-Dehnungstester (z. B. Fa. Zwick, DE) feststellen (vgl. Figur 2). Für diesen Test werden zunächst aus der Polyesterfolie und der Menüschale zwei 15 mm breite und ca. 50 mm lange Streifen ausgeschnitten und gegeneinander gesiegelt. Die gesiegelten Streifen werden - wie in der Figur 2 dargestellt - in die Kluppen des Testers eingespannt. Der "Winkel" zwischen der in der oberen Kluppe eingespannten Folie und dem Menüschalenstreifen beträgt 180°. Bei diesem Test werden die Kluppen des Testers mit einer Geschwindigkeit von 200 mm/min auseinander gefahren, wobei die Folie im günstigsten Fall von der Menüschale vollständig abgeschält wird (vgl. z. B. ASTM-D 3330).

Bei diesem Test ist im Wesentlichen zwischen zwei unterschiedlichen Mechanismen zu unterscheiden.

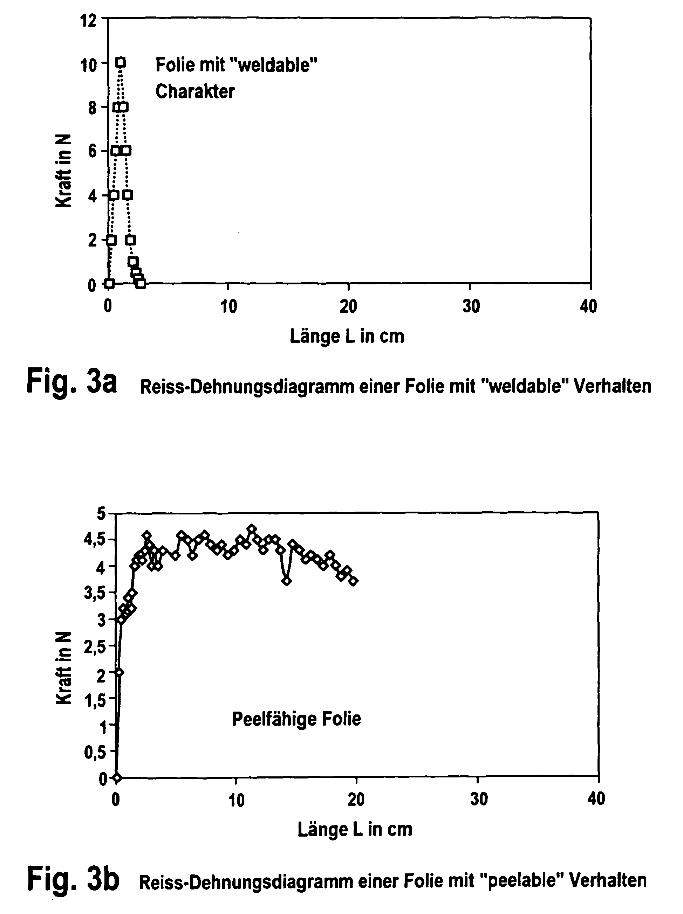

Im ersten Fall steigt beim Ziehvorgang die Zugkraft schnell bis zu einem Maximum an (vgl. Figur 3a) und fällt danach direkt wieder auf Null zurück. Beim Erreichen der Maximalkraft reißt die Folie ein oder vor dem Delaminieren von der Menüschale ab, wodurch die Kraft sofort wieder auf Null zurückgeht. Die Folie ist in diesem Fall nicht peelfähig, da sie zerstört wird. Das Verhalten der Folie lässt sich eher als eine Art "Verschweißen" (engl. weldable) mit der Menüschale beschreiben. Die Zerstörung der Folie beim Abziehen von der Menüschale ist unerwünscht, weil damit das saubere und leichte Öffnen der Verpackung (engl. easy opening) ohne Werkzeuge wie Schere oder Messer erschwert wird.

Eine peelfähige Folie wird dagegen erhalten, wenn die Zug- oder die Schälkraft bis zu einem bestimmten Wert (bzw. bis zu einem bestimmten Plateau) ansteigt und dann über die Strecke, über die die beiden Streifen miteinander gesiegelt sind, in etwa konstant bleibt (vgl. Figur 3b). In diesem Fall reißt die Folie nicht ein, sondern lässt sich wie gewünscht von der Menüschale mit geringem Kraftaufwand abschälen (engl. peelen).

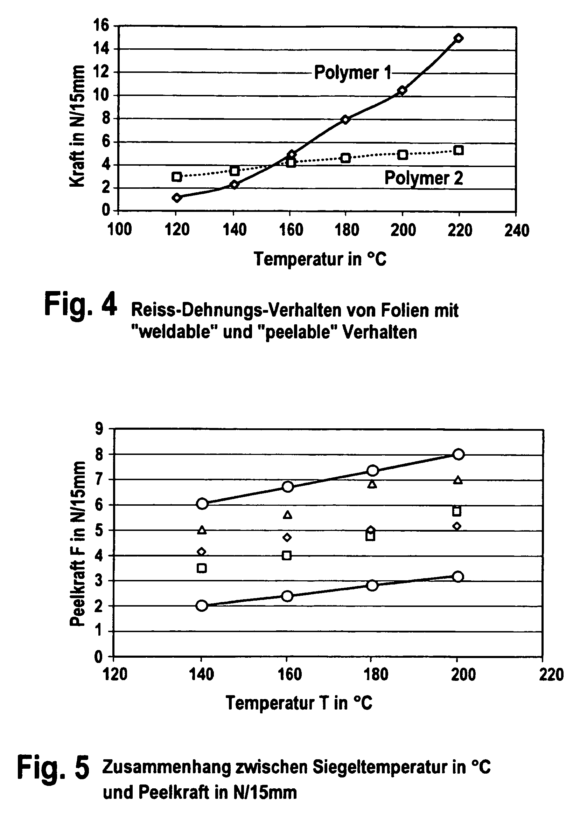

Die Höhe der Peelkraft wird in erster Linie von den in der Siegelschicht (A) verwendeten Polymeren bestimmt (vgl. Figur 4, Polymer 1 und Polymer 2). Daneben ist die Höhe der Peelkraft insbesondere abhängig von der angewandten Heißsiegeltemperatur. Die Peelkraft steigt in der Regel mit der Heißsiegeltemperatur an. Mit zunehmender Heißsiegeltemperatur wächst dabei die Gefahr, dass die Siegelschicht ihre Peelfähigkeit verliert. D. h., eine Folie, die bei Anwendung einer geringen Heißsiegeltemperatur peelfähig ist, verliert diese Eigenschaft, wenn eine genügend hohe Heißsiegeltemperatur angewendet wird. Dieses Verhalten ist insbesondere bei Polymeren zu erwarten, die die in Figur 4 für Polymer 1 gezeigte Charakteristik aufzeigen. Diesem tendenziell allgemeingültigen aber für die Anwendung eher ungünstigen Verhalten muss bei der Gestaltung der Siegelschicht Rechnung getragen werden. Die Folie muss in einem genügend großen Temperaturbereich heißgesiegelt werden können, ohne dass dabei die gewünschte Peelfähigkeit verloren geht (vgl. Polymer 2 in Figur 4). In der Praxis beträgt dieser Temperaturbereich im Allgemeinen 150 bis 220 °C, bevorzugt 150 bis 200 °C und besonders bevorzugt 150 bis 190 °C.

Die heißsiegelbare und peelfähige Schicht wird nach dem Stand der Technik in der Regel mittels sogenannter off-line Methoden (d. h. in einem zusätzlichen, der Folienherstellung nachgeordneten Prozessschritt) auf die Polyesterfolie aufgebracht. Bei dieser Methode wird zunächst eine "Standardpolsterfolie" nach einem üblichen Verfahren hergestellt. Die so hergestellte Polyesterfolie wird dann in einem weiteren Verarbeitungsschritt in einer Beschichtungsanlage "off-line" mit einer heißsiegelbaren und peelfähigen Schicht beschichtet. Bei diesem Verfahren wird das heißsiegelbare und peelfähige Polymer zunächst in einem organischen Lösungsmittel aufgelöst. Die fertige Lösung wird dann über ein geeignetes Antragsverfahren (Messergießer, Rasterwalze, Düse) auf die Folie appliziert. In einem nachgeschalteten Trockenofen wird das Lösungsmittel verdunstet und das peelfähige Polymer bleibt als feste Schicht auf der Folie zurück.

Solch ein off-line Antrag der Siegelschicht ist aus mehreren Gründen vergleichsweise kostspielig. Erstens muss die Beschichtung der Folie in einem separaten Schritt in einer speziellen Apparatur erfolgen. Zweitens muss das verdampfte Lösemittel wieder kondensiert und rückgewonnen werden, um somit die Umwelt über die Abluft möglichst wenig zu belasten. Drittens ist ein großer Kontrollaufwand erforderlich, um sicherzustellen, dass der Restlösemittelgehalt in der Beschichtung möglichst gering ist.

Außerdem kann in einem wirtschaftlichen Verfahren das Lösemittel nie vollständig während der Trocknung aus der Beschichtung entfernt werden, insbesondere weil der Trocknungsvorgang nicht beliebig lang sein kann. In der Beschichtung verbleibende Spuren des Lösemittels migrieren anschließend über die auf dem Tray befindliche Folie in die Speisen, wo sie den Geschmack verfälschen oder sogar den Konsumenten gesundheitlich schädigen können.

Auf dem Markt werden verschiedene off-line hergestellte peelfähige, heißsiegelbare Polyesterfolien angeboten. Die Polyesterfolien unterscheiden sich im Aufbau und in der Zusammensetzung der Deckschicht (A). Sie gelangen entsprechend ihrer (Peel)-Eigenschaften in unterschiedliche Anwendungen. Es ist z. B. üblich, die Folien von Seiten der Anwendung in Folien mit leichter Peelbarkeit (easy peel), mit fester Peelbarkeit (medium peel) und mit starker, widerstandsfähiger Peelbarkeit (strong peel) zu unterteilen. Wesentliches quantifizierbares Unterscheidungsmerkmal zwischen diesen Folien ist die Höhe der jeweiligen Peelkraft entsprechend der Figur 3b. Eine Einteilung wird an dieser Stelle wie folgt vorgenommen:

| Leichte Peelbarkeit (easy peel) | Peelkraft im Bereich von ungefähr 1 bis 4 N je 15 mm Streifenbreite |
|---|---|
| Feste Peelbarkeit (medium peel) | Peelkraft im Bereich von ungefähr 3 bis 8 N je 15 mm Streifenbreite |
| Starke, widerstandsfähige Peelbarkeit (strong peel) | Peelkraft im Bereich von mehr als 5 N je 15 mm Streifenbreite |

Einige siegelbare PET-Folien sind bereits bekannt.

In der EP-A-0 515 096 wird eine coextrudierte, mehrschichtige, siegelfähige Polyesterfolie beschrieben, die auf der siegelfähigen Schicht ein zusätzliches Additiv enthält und sich durch eine entsprechende Topographie auszeichnet (Anzahl der Erhebungen und Bereich für die mittlere Höhe der Erhebungen). Die Folien können weiß oder transparent sein. Das Additiv (= Antiblockmittel) in der Siegelschicht kann z. B. anorganische Partikel enthalten und wird vorzugsweise in einer wässrigen Schicht auf die Folie bei deren Herstellung angetragen. Daneben kann das Additiv aber auch direkt in die Siegelschicht eingearbeitet werden. Hierdurch soll die Folie die guten Siegeleigenschaften beibehalten und gut zu verarbeiten sein. Die Rückseite der Folie enthält vorzugsweise nur sehr wenige, vergleichsweise kleine Partikel, die hauptsächlich über das Eigenregranulat in diese Schicht gelangen. Angaben zum Siegeltemperaturbereich der Folie werden in dieser Schrift nicht gemacht. Die Siegelnahtfestigkeit wird bei 140 °C gemessen und beträgt mehr als 200 N/m (entsprechend 3 N/15 mm Folienbreite).

Für eine 3 µm dicke Siegelschicht wird eine Siegelnahtfestigkeit von 275 N/m (entsprechend 4,125 N/15 mm Folienbreite) angegeben.

In der EP-A-0 035 835 wird eine coextrudierte siegelfähige Polyesterfolie beschrieben, der zur Verbesserung des Wickel- und des Verarbeitungsverhaltens in der Siegelschicht Partikel beigesetzt werden, deren mittlere Teilchengröße die Schichtdicke der Siegelschicht übersteigt. Das Polymer der Versiegelungsfolienschicht ist im Wesentlichen ein Polyestercopolymer, das auf Basis von aromatischen Dicarbonsäuren sowie aliphatischen Diolen aufgebaut ist. Durch die teilchenförmigen Zusatzstoffe werden Oberflächenvorsprünge gebildet, die ein unerwünschtes Blocken und Kleben der Folie an Walzen oder Führungen verhindern. Durch Wahl von Partikeln mit größerem Durchmesserals die Siegelschicht wird das Siegelverhalten der Folie verschlechtert. Angaben zum Siegeltemperaturbereich der Folie werden in der Schrift nicht gemacht. Die Siegelnahtfestigkeit wird bei 140 °C gemessen und liegt in einem Bereich von 63 bis 120 N/m (entsprechend 0,97 bis 1,8 N/15 mm Folienbreite). Über das Peelverhalten der Folie gegen Menüschalen aus APET/CPET oder CPET finden sich in der Schrift keine Hinweise.

In der EP-A-0 379 190 wird eine coextrudierte, biaxial orientierte Polyesterfolie beschrieben, die eine Trägerfolienschicht aus Polyester und mindestens eine Versiegelungsfolienschicht aus einer Polyester-Zusammensetzung umfasst. Die Versiegelungsfolienschicht kann aliphatische und aromatische Dicarbonsäuren sowie aliphatische Diole enthalten. Das Polymer für die Versiegelungsfolienschicht enthält zwei unterschiedliche Polyester A und B, von denen zumindest einer (Polyester B) aliphatische Dicarbonsäuren und/oder aliphatische Diole enthält. Die Versiegelungsenergie, die zwischen zwei sich gegenüberliegenden, miteinander verbundenen Versiegelungsfolienschichten gemessen wird (= Fin- Siegelung), beträgt mehr als 400$g_{force}$· cm/15 mm (mehr als 4N·cm/15 mm), wobei die Versiegelungsfolienschicht anorganische und/oder organische feine Teilchen enthalten kann, die im Polyester nicht löslich sind und wobei die feinen Teilchen in einer Menge von 0,1 bis 5 Gew.-% vorhanden sind, bezogen auf das Gesamtgewicht der Versiegelungsfolienschicht. In den Beispielen der EP-A-0 379 190 werden organische Partikel - sofern sie überhaupt eingesetzt werden - in Mengen von maximal 0,3 Gew.-% eingesetzt. Die Folie zeichnet sich zwar durch gute Peeleigenschaften (mit Plateau-Charakter im Peeldiagramm [s.o.]) gegen sich selbst aus (d. h. Versiegelungsfolienschicht gegen Versiegelungsfolienschicht), über das Peelverhalten gegen Menüschalen aus APET/CPET und CPET finden sich dort jedoch keine Hinweise. Insbesondere aber ist die Folie gemäß dieser Erfindung verbesserungswürdig in ihrer Herstell- und ihrer Verarbeitbarkeit (die Rohstoffe neigen zum Kleben).

In der WO A- 96/19333 wird ein Verfahren zur Herstellung peelfähiger Folien beschrieben, bei dem die heißsiegelbare, peelfähige Schicht in-line auf die Polyesterfolie aufgebracht wird. Bei dem Verfahren werden vergleichsweise geringe Mengen von organischen Lösungsmitteln verwendet. Die heißsiegelbare, peelfähige Schicht enthält einen Copolyester, der a) 40 bis 90 Mol-% einer aromatischen Dicarbonsäure, b) 10 bis 60 Mol-% einer aliphatischen Dicarbonsäure, c) 0,1 bis 10 Mol-% einer Dicarbonsäure enthaltend eine freie Säuregruppe oder ein Salz davon, d) 40 bis 90 Mol-% eines Glykols enthaltend 2 bis 12 Kohlenstoffatome und e) 10 bis 60 Mol-% eines Polyalkyldiols aufweist. Die Beschichtung wird aus einer wässrigen Dispersion oder einer Lösung, die bis zu 10 Gew.-% organisches Lösungsmittel enthält, an die Folie angetragen. Das Verfahren ist hinsichtlich der verwendbaren Polymere und der erzielbaren Schichtdicken für die heißsiegelbare, peelfähige Schicht eingeschränkt. Die maximal erreichbare Schichtdicke wird mit 0,5 $\mu$m angegeben. Die maximale Siegelnahtfestigkeit ist gering, sie beträgt 500 bis 600 g/25 mm$^2$, bzw. [(500 bis 600)/170] N/15 mm Folienbreite.

In der WO 02/059186 A1 wird ein Verfahren zur Herstellung peelfähiger Folien beschrieben, bei dem die heißsiegelbare, peelfähige Schicht ebenfalls in-line auf die Polyesterfolie aufgebracht wird. Die Folien können weiß oder transparent sein. Zur Herstellung der heißsiegelbaren, peelfähigen Schicht wird in diesem Fall die sogenannte Schmelz-Beschichtung (melt-coating) angewendet, wobei vorzugsweise die längsgestreckte Folie mit dem heißsiegelbaren, peelfähigen Polymer beschichtet wird. Das heißsiegelbare, peelfähige Polymer enthält Polyester auf Basis von aromatischen und aliphatischen Säuren, sowie auf Basis von aliphatischen Diolen. Die in den Beispielen offenbarten Copolymere haben Glasübergangstemperaturen von unter -10 °C; solche Copolyester sind zu weich, weshalb sie sich nicht in üblichen Walzenstreckverfahren orientieren lassen (Kleben an den Walzen). Die Dicke der heißsiegelbaren, peelfähigen Schicht beträgt weniger als 8 $\mu$m. In der WO 02/059186 A1 wird die an sich bekannte Schmelz-Beschichtung von der an sich bekannten Extrusions-Beschichtung technisch und über die Viskosität der Schmelze abgegrenzt. Nachteilig an dem Verfahren ist, dass nur vergleichsweise dünnflüssige Polymere (max. 50 Pa · s) mit niedrigem Molekulargewicht verwendet werden können. Daraus resultieren nachteilige Peel-Eigenschaften der Folie. Außerdem ist bei diesem Verfahren die Beschichtungsgeschwindigkeit limitiert, wodurch der Herstellungsprozess unwirtschaftlich wird. Qualitätsmäßig zeigen sich Mängel bei der Optik der Folie, die z. B. als Beschichtungsstreifen sichtbar werden. Auch ist es bei diesem Verfahren schwierig, eine über die Bahnbreite der Folie gleichmäßige Dicke der Siegelschicht zu erhalten, was wiederum zu einer ungleichmäßigen Peelcharakteristik führt.

Aufgabe dervorliegenden Erfindung war es, eine weiße, heißsiegelbare und peelfähige, biaxial orientierte Polyesterfolie zur Verfügung zu stellen, die sich durch hervorragende Peeleigenschaften insbesondere gegenüber Menüschalen aus APET/CPET oder CPET auszeichnet. Sie bzw. ihre Herstellungsverfahren sollten die Nachteile der Folien nach dem Stand der Technik nicht mehr aufweisen und sich insbesondere dadurch auszeichnen, dass

- sie gegenüber dem CPET und der APET-Seite von Menüschalen aus APET/CPET eine leichte bis feste Peelbarkeit (easy peel bis medium peel) zeigt. Die Peelkraft sollte im Bereich von 1 bis 8 N je 15 mm, bevorzugt im Bereich von 2,0 bis 8 N je 15 mm und besonders bevorzugt im Bereich von 2,3 bis 8 N je 15 mm Folienstreifenbreite liegen;
- in der heißsiegelbaren und peelfähigen Schicht keine organischen Lösemittelrückstände enthalten sind;
- die heißsiegelbare und peelfähige Schicht gegenüber der CPET Menüschale und der APET-Seite von Menüschalen aus APET/CPET eine Mindestsiegeltemperatur von 165 °C, bevorzugt 160 °C, besonders bevorzugt 155 °C aufweist und wobei die maximale Siegeltemperatur im Allgemeinen 220 °C, bevorzugt 200 °C und besonders bevorzugt 190 °C beträgt;
- bei ihrer Herstellung Verfahren angewendet werden, bei denen von vornherein keine organischen Lösemittel verwendet werden;

- die Folien einen hohen Weißgrad von > 60, bevorzugt > 65, besonders bevorzugt > 70 und eine niedrige Transparenz (Lichttransmission) von < 60%, bevorzugt < 55%, besonders bevorzugt < 50 % haben;
- sich die Folie wirtschaftlich herstellen lässt. Dies bedeutet beispielsweise auch, dass zur Herstellung der Folie in der Industrie übliche Streckverfahren eingesetzt werden können. Weiterhin sollte die Folie bei heute üblichen Maschinengeschwindigkeiten bis zu 500 m/min herstellbar sein;
- eine gute Haftung (bevorzugt größer als 2 N/15 mm Folienbreite) zwischen den einzelnen Schichten der Folie für deren praktische Anwendung gewährleistet ist;
- bei der Herstellung der Folie gewährleistet ist, dass das Regenerat in einer Menge von bis zu ca. 60 Gew.-% wieder der Extrusion zugeführt werden kann, ohne dass dabei die physikalischen (die Reißfestigkeit der Folie in beiden Richtungen sollte nicht um mehr als 10 % abnehmen), insbesondere aber die optischen Eigenschaften der Folie nennenswert negativ beeinflusst werden.

Außerdem sollte dafür Sorge getragen werden, dass die Folie auf schnelllaufenden Maschinen verarbeitet werden kann. Andererseits sollten sich gleichzeitig die bekannten, Polyesterfolien auszeichnende Eigenschaften nicht verschlechtern. Hierzu gehören beispielsweise die guten mechanischen (der E-Modul der biaxial gestreckten Folien sollte in beiden Orientierungsrichtungen größer als 3000 N/mm² , bevorzugt größer als 3500 N/mm² und besonders bevorzugt größer als 4000 N/mm² sein) und die thermischen Eigenschaften (der Schrumpf der biaxial gestreckten Folien sollte in beiden Orientierungsrichtungen nicht größer als 3 %, bevorzugt nicht größer als 2,8 % und besonders bevorzugt nicht größer als 2,5 % sein), das Wickelverhalten und die Verarbeitbarkeit der Folie, insbesondere bei der Bedruckung, Kaschierung oder bei der Beschichtung der Folie mit metallischen oder keramischen Materialien.

Unter heißsiegelbar wird hier die Eigenschaft einer coextrudierten, mehrschichtigen, mindestens eine Basisschicht (B) aufweisenden Polyester-Folie verstanden, die zumindest eine Deckschicht (= heißsiegelbare Deckschicht) aufweist, die mittels Siegelbacken durch Anwendung von Wärme (140 bis 220 °C) und Druck (2 bis 5 bar) in einer bestimmten Zeit (0,2 bis 2 s) mit sich selbst (Fin-Siegelung), bzw. mit einem Substrat aus thermoplastischem Kunststoff (= Lap-Siegelung, hier insbesondere mit CPET- und APET/CPET-Menüschalen) verbunden werden kann, ohne dass dabei die Trägerschicht (= Basisschicht) selbst plastisch wird. Um dies zu erreichen, besitzt das Polymer der Siegelschicht im Allgemeinen einen deutlich niedrigeren Schmelzpunkt als das Polymer der Basisschicht. Wird als Polymer für die Basisschicht beispielsweise Polyethylenterephthalat mit einem Schmelzpunkt von 254 °C verwendet, so beträgt der Schmelzpunkt der heißsiegelbaren Schicht im Allgemeinen weniger als 230 °, im vorliegenden Fall bevorzugt weniger als 210 ° und besonders bevorzugt weniger als 190 °C.

Unter peelfähig wird hier die Eigenschaft der erfindungsgemäßen Polyester-Folie verstanden, die zumindest eine Schicht (= heißsiegelbare und peelfähige Deckschicht) aufweist, die nach der Heißsiegelung auf ein Substrat derart wieder von dem Substrat abgezogen werden kann, dass dabei die Folie weder ein- noch abreißt. Der Verbund aus heißsiegelfähiger Folie und Substrat geht beim Abziehen der Folie von dem Substrat in der Naht zwischen der Heißsiegelschicht und der Substratoberfläche auf (vgl. auch Ahlhaus, O.E.: Verpackung mit Kunststoffen, Carl Hanser Verlag, S. 271, 1997, ISBN 3-446-17711-6). Beim Abziehen der auf einen Teststreifen des Substrates heißgesiegelten Folie in einem Zug-Dehnungs-Prüfgerät unter einem Schälwinkel von 180° entsprechend Figur 2 wird dann ein Reiß-Dehnverhalten der Folie gemäß Figur 3b erhalten. Bei Beginn des Abschälens der Folie von dem Substrat steigt die dazu erforderliche Kraft gemäß Figur 3b bis zu einem bestimmten Wert (z. B. 4 N/15 mm) an und bleibt dann über den gesamtem Schälweg in etwa konstant, ist allerdings mit mehr oder weiniger großen Schwankungen behaftet (ca. ± 20 %).

Gelöst wird die Aufgabe durch die Bereitstellung einer weißen, coextrudierten, biaxial orientierten Polyesterfolie, welche eine weiße Basisschicht (B) und eine heißsiegelbare und zumindest gegenüber APET/CPET und CPET peelfähige Deckschicht (A) aufweist, wobei die Deckschicht (A)

a) 80 bis 99 Gew.-% Polyester und
b) 1 bis 10 Gew.-% anorganische und/oder organische Partikel mit einem mittleren Durchmesser $d_{50}$ von 2,5 bis 12,0 μm (jeweils bezogen auf die Masse der Deckschicht (A)) enthält und wobei
c) der Polyester zu 12 bis 89 Mol-% aus Einheiten aufgebaut ist, die auf mindestens eine aromatische Dicarbonsäure und zu 11 bis 88 Mol-% aus Einheiten aufgebaut ist, die auf mindestens eine aliphatische Dicarbonsäure zurückgehen, wobei die Summe der dicarbonsäureabgeleiteten Molprozente 100 ergibt, und
d) das Verhältnis aus Teilchengröße $d_{50}$ und Schichtdicke $d_A$ der Deckschicht (A) größer/gleich 1 ist.

Die Schichtdicke der Deckschicht (A) $d_A$ beträgt 0,7 bis 10,0 μm.
Die Basisschicht (B) enthält zur Erzielung des gewünschten Weißgrades und der gewünschten niedrigen Transparenz (Lichttransmission) ein anorganisches Pigment oder ein mit Polyester unverträgliches Polymer oder eine Kombination aus beiden. Es können auch mehrere anorganische Pigmente und/oder mehrere mit Polyester unverträgliche Polymere verwendet werden.
Die o. g. Parameter sind jeweils als bevorzugte Werte zu verstehen.

Das Material der Deckschicht (A) besteht also überwiegend aus einem Polyester und anorganischen und/oder organischen Partikeln. Der Polyester ist aufgebaut aus Einheiten, die von aromatischen und aliphatischen Dicarbonsäuren abgeleitet sind. Die auf die aromatischen Dicarbonsäuren zurückgehenden Einheiten sind in dem Polyester in einer Menge von 12 bis 89 Mol-%, bevorzugt 30 bis 84 Mol-%, besonders bevorzugt 40 bis 82 Mol-%, enthalten. Die auf die aliphatischen Dicarbonsäuren zurückgehenden Einheiten sind in dem Polyester in einer Menge von 11 bis 88 Mol-%, bevorzugt 16 bis 70 Mol-%, besonders bevorzugt 18 bis 60 Mol-%, enthalten, wobei die Mol-%-Angaben sich immer zu 100 % ergänzen. Die hierzu korrespondierenden Dioleinheiten ergeben ebenfalls immer 100 Mol-%.

Bevorzugte aliphatische Dicarbonsäuren sind Bernsteinsäure, Pimelinsäure, Korksäure, Azelainsäure, Sebazinsäure, Glutarsäure und Adipinsäure. Besonders bevorzugt sind die Azelainsäure, die Sebazinsäure und die Adipinsäure.

Bevorzugte aromatische Dicarbonsäuren sind Terephthalsäure, Isophthalsäure und 2,6-Naphthalindicarbonsäure, insbesondere Terephthalsäure und Isophthalsäure.

Bevorzugte Diole sind Ethylenglykol, Butylenglykol und Neopentylglykol.

Im Allgemeinen beinhaltet der Polyester die folgenden Dicarboxylate und Alkylene, jeweils bezogen auf die Gesamtdicarboxylat- bzw. Gesamtalkylenmenge:

12 bis 89 Mol-%, bevorzugt 25 bis 79 Mol-% und besonders bevorzugt 30 bis 72 Mol-% Terephthalat;

0 bis 25 Mol-%, bevorzugt 5 bis 20 Mol-% und besonders bevorzugt 10 bis 20 Mol-% Isophthalat;

11 bis 88 Mol -%, bevorzugt 16 bis 70 Mol-% und besonders bevorzugt 17 bis 58 Mol-% Azelat;

0 bis 50 Mol-%, bevorzugt 0 bis 40 Mol-% und besonders bevorzugt 0,2 bis 30 Mol-% Sebazat;

0 bis 50 Mol-%, bevorzugt 0 bis 40 Mol-% und besonders bevorzugt 0 bis 30 Mol-% Adipat;

mehr als 30 Mol -%, bevorzugt mehr als 40 Mol-% und besonders bevorzugt mehr als 50 Mol-% Ethylen oder Butylen.

Bis zu 10 Gew.-% des Materials der Deckschicht(A) besteht aus weiteren Additiven, Hilfsmitteln und/oder sonstigen in der Polyesterfolientechnologie üblicherweise verwendeten Zusatzstoffen.

In einer günstigen Ausführungsform enthält darüber hinaus das Material der Deckschicht(A) zu 2 bis 19 Gew.-%, bevorzugt 5 bis 17 Gew.-% und besonders bevorzugt 7 bis 16 Gew.-% ein Polymer, welches mit Polyester unverträglich ist (anti-PET-Polymer).

Es hat sich als zweckmäßig erwiesen, den Hauptpolyester der Deckschicht (A) aus zwei getrennten Polyestern I und II herzustellen, die dem Extruder für diese Schicht als Mischung zugeführt werden.

Die heißsiegelbare und peelfähige Deckschicht (A) zeichnet sich durch charakteristische Merkmale aus. Sie besitzt eine Siegelanspringtemperatur (= Mindestsiegeltemperatur) gegenüberAPET/CPET und gegenüber CPET-Menüschalen von nicht mehr als 165 °C, bevorzugt nicht mehr als 160 °C und besonders bevorzugt nicht mehr als 155 °C und eine Peelkraft gegenüber APET/CPET und CPET Menüschalen von mindestens 1 N, bevorzugt mindestens 2,0 N, besonders bevorzugt mindestens 2,3 N (immer bezogen auf 15 mm Folienbreite). Die heißsiegelbare und peelfähige Deckschicht (A) hat gegenüber APET/CPET und CPET-Menüschalen eine max. Siegeltemperatur von im Allgemeinen 220 °C, bevorzugt 200 °C und besonders bevorzugt 190 °C, wobei im gesamten Siegelbereich eine gegenüber APET/ CPET und CPET-Menüschalen peelfähige Folie erhalten wird. D. h., mit dieser Folie wird beim 180°-Zugversuch gemäß Figur 2 eine Kurve gemäß Figur 3b erhalten. Der Begriff Menüschalen ist gleichzusetzen mit Materialien allgemein.

Für die bevorzugten, oben angegebenen Bereiche lassen sich die Peelergebnisse auch zahlenmäßig beschreiben. Entsprechend den vorliegenden experimentellen Untersuchungen können die Peelergebnisse einfach durch folgenden Zusammenhang zwischen der Siegeltemperatur (T = $\vartheta$ in °C) und der Peelkraft (in N/15 mm) miteinander korreliert werden

$$0,02 \bullet \vartheta \,/\,°C - 0,8 \leq PeelkraftF \;/\,N \; je\,15mm \leq 0,033 \bullet \vartheta \,/\,°C + 1,4$$

Dieser Zusammenhang ist graphisch zur Veranschaulichung in Figur 5 dargestellt.

Die Folie nach der vorliegenden Erfindung weist eine Basisschicht (B) und mindestens eine erfindungsgemäße Deckschicht (A) auf. In diesem Fall ist die Folie zweischichtig aufgebaut. In einer bevorzugten Ausführungsform ist die Folie drei - oder mehr als dreischichtig aufgebaut. Im Falle der besonders bevorzugten dreischichtigen Ausführungsform besteht sie dann aus der Basisschicht (B), der erfindungsgemäßen Deckschicht (A) und einer der Deckschicht (A) gegenüberliegenden Deckschicht (C); Folienaufbau A-B-C. Bei einer vierschichtigen Ausführungsform enthält die Folie eine Zwischenschicht (D) zwischen der Basisschicht (B) und der Deckschicht (A) oder (C).

Die Basisschicht der Folie besteht bevorzugt zu mindestens 80 Gew.-% aus thermoplastischem Polyester (bezogen auf das Gewicht der Basisschicht (B)). Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Ethyleneinheiten enthaltende Polyester, die - bezogen auf die Dicarboxylateinheiten - aus mindestens 90 Mol-%, besonders bevorzugt mindestens 95 Mol-%, Terephthalat- oder 2,6-Naphthalat-Einheiten bestehen. Die restlichen Monomereinheiten stammen aus anderen Dicarbonsäuren bzw. Diolen. In vorteilhafter Weise können für die Basisschicht (B) auch Copolymere oder Mischungen oder Blends aus den genannten Homo- und/oder Copolymeren verwendet werden. Bei der Angabe der Mengen für die Dicarbonsäuren bildet die Gesamtmenge aller Dicarbonsäuren 100 Mol-%. Analog bildet die Gesamtmenge aller Diole auch 100 Mol-%.

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$ Alkandisäuren besonders geeignet, wobei der Alkanteil geradkettig oder verzweigt sein kann.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 KohlenstoffAtomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Besonders vorteilhaft ist es, wenn in der Basisschicht (B) ein Polyester-Copolymer auf Basis von Terephthalat und geringen Mengen (bevorzugt < 5Mol-%) Isophthalsäure oder auf Basis von Terephthalat und geringen Mengen (bevorzugt < 5Mol-%) Naphthalin-2,6-dicarbonsäure verwendet wird. In diesem Fall ist die Herstellbarkeit der Folie besonders gut. Die Basisschicht (B) enthält dann im Wesentlichen ein Polyestercopolymeres, das überwiegend aus Terephthalsäure und Isophthalsäure -Einheiten und/oder Terephthalsäure- und Naphthalin-2,6-dicarbonsäure-Einheiten und aus Ethylenglykol-Einheiten zusammengesetzt ist. Die besonders bevorzugten Copolyester, die die gewünschten Eigenschaften der Folie bereitstellen, sind solche, die aus Terephthalat- und Isophthalat-Einheiten und aus Ethylenglykol-Einheiten aufgebaut sind.

Die Herstellung der Polyester kann z. B. nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid, Titanoxide oder Ester sowie Germanium-Verbindungen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Zur Erzielung des gewünschten Weißgrades und der gewünschten niedrigen Transparenz (Lichttransmission) enthält die Basisschicht (B) ein anorganisches Weißpigment oder ein mit Polyester weitgehend unverträgliches Polymer oder eine Kombination aus beiden. Als anorganische Weißpigmente kommen z. B. Titandioxid, Calciumcarbonat, Bariumsulfat, Zinksulfid oder Zinkoxid in Frage. Um zu dem gewünschten Weißgrad (>60) und zu der gewünschten niedrigen Transparenz (< 60 %) zu gelangen, sollte die Basisschicht (B) hochgefüllt sein.

In einer bevorzugten Ausführungsform wird Titandioxid ($TiO_2$) als alleiniges einfärbendes Pigment verwendet. Es wird bevorzugt als Extrusionsmasterbatch (die Titandioxid-Konzentration ist hier deutlich höher als in der biaxial orientierten Folie) dem Originalrohstoff zugegeben. Typische Werte für die $TiO_2$-Konzentration im Extrusionsmasterbatch sind 50 Gew.-% Titandioxid. Das Titandioxid kann sowohl vom Rutil-Typ als auch vom Anatas-Typ sein. Vorzugsweise wird Titandioxid vom Rutil-Typ verwendet. Die Korngröße des Titandioxids liegt in der Regel zwischen 0,05 und 0,5 $\mu$m, bevorzugt zwischen 0,1 und 0,3 $\mu$m. Die Folie erhält durch die eingearbeiteten $TiO_2$-Pigmente in der Basisschicht (B) ein brillantes weißes Aussehen. Die $TiO_2$-Konzentration zur Erzielung des gewünschten Weißgrades (> 60) und der gewünschten niedrigen Transparenz (< 60 %) liegt in der Regel bei über 3 Gew.-%, jedoch unterhalb von 20 Gew.-%, vorzugsweise über 4 Gew.-%, jedoch unterhalb 18 Gew.-% und ganz besonders bevorzugt oberhalb 5 Gew.-%, jedoch unterhalb 16 Gew.-%, bezogen auf das Gesamtgewicht der Basisschicht (B).

In einer weiteren bevorzugten Ausführungsform enthält die Basisschicht (B) mindestens Bariumsulfat als Pigment. Die Bariumsulfat Konzentration zur Erzielung des gewünschten Weißgrades (> 60) und der gewünschten niedrigen Transparenz (< 60 %) beträgt in der Regel 0,2 bis 40 Gew.-%, vorzugsweise 0,5 bis 30 Gew.-%, besonders bevorzugt 1 bis 25 Gew.-%, bezogen auf das Gewicht des kristallisierbaren Thermoplasten in der Basisschicht (B). Die mittlere Teilchengröße des Bariumsulfats ist relativ klein und liegt vorzugsweise im Bereich von 0,1 bis 5 $\mu$m, besonders bevorzugt im Bereich von 0,2 bis 3 $\mu$m (Sedigraphmethode). Die Dichte des verwendeten Bariumsulfates liegt bevorzugt zwischen 4 und 5 g/cm$^3$. Vorzugsweise wird das Bariumsulfat als Extrusionsmasterbatch bei der Folienherstellung dem Thermoplasten zudosiert. In einer bevorzugten Ausführungsform werden gefällte Bariumsulfat-Typen eingesetzt. Gefälltes Bariumsulfat wird aus Bariumsalzen und Sulfaten oder Schwefelsäure als feinteiliges farbloses Pulver, dessen Korngröße durch die Fällungsbedingungen zu steuern ist, erhalten. Gefällte Bariumsulfate können nach den üblichen Verfahren, die in Kunststoff-Journal 8, Nr. 10, 30-36 und Nr. 11, 31-36 (1974) beschrieben sind, hergestellt werden. In einer besonders bevorzugten Ausführungsform enthält die Basisschicht der erfindungsgemäßen Folie als Hauptbestandteil ein kristallisierbares Polyethylenterephthalat sowie 1 bis 25 Gew.-% gefälltes Bariumsulfat, zweckmäßigerweise mit einem Teilchendurchmesser von 0,4 bis 1 µm, wobei ®Blanc fixe XR-HX oder Blanc fixe HXH von der Firma Sachtleben Chemie, Deutschland, besonders bevorzugt wird.

Zu einer weiteren Steigerung des Weißgrades können geeignete optische Aufheller der Basisschicht (B) zugesetzt werden, wobei der optische Aufheller in Mengen im Bereich von 10 bis 50.000 ppm, insbesondere von 20 bis 30.000 ppm, besonders bevorzugt von 50 bis 25.000 ppm, bezogen auf das Gewicht des kristallisierbaren Thermoplasten in (B), eingesetzt wird. Vorzugsweise wird auch der optische, Aufheller als Extrusionsmasterbatch bei der Folienherstellung dem Thermoplasten zudosiert. Die erfindungsgemäßen optischen Aufheller sind in der Lage, UV-Strahlen im Bereich von 360 bis 380 nm zu absorbieren und als längerwelliges, sichtbares blauviolettes Licht wieder abzugeben. Geeignete optische Aufheller sind z. B. Bis-benzoxazole, Phenylcumarine und Bis-sterylbiphenyle, insbesondere Phenylcumarin, besonders bevorzugt sind Triazinphenylcumarin, die unter der Produktbezeichnung ®Tinopal bei Ciba-Geigy, Basel, Schweiz, erhältlich sind, oder ®Hostalux KS (Clariant, Deutschland) sowie ®Eastobrite OB-1 (Eastman).

Sofern zweckmäßig können neben dem optischen Aufheller auch noch in Polyester lösliche blaue Farbstoffe der Basisschicht (B) zugesetzt werden. Als geeignete blaue Farbstoffe haben sich z. B. Kobaltblau, Ultramarinblau und Anthrachinonfarbstoffe, insbesondere Sudanblau 2 (BASF, Ludwigshafen, Bundesrepublik Deutschland), erwiesen. Die blauen Farbstoffe werden in Mengen von 10 bis 10.000 ppm, insbesondere 20 bis 5.000 ppm, besonders bevorzugt 50 bis 1.000 ppm, bezogen auf das Gewicht des kristallisierbaren Thermoplasten, eingesetzt.

Erfindungsgemäß können Titandioxid oder das Bariumsulfat, der optische Aufheller und gegebenenfalls der blaue Farbstoff bereits beim Thermoplast-Rohstoffhersteller zudosiert werden oder bei der Folienherstellung über Masterbatch-Technologie in den Extruder z. B. für die Basisschicht (B) dosiert werden. Besonders bevorzugt ist die Zugabe des Titandioxids oder des Bariumsulfats, des optischen Aufhellers und gegebenenfalls des blauen Farbstoffes über die Masterbatch-Technologie. Die Additive werden bevorzugt in einem festen Trägermaterial voll dispergiert. Als Trägermaterialien kommen der Thermoplast selbst, wie z. B. das Polyethylenterephthalat oder auch andere Kunststoffe, die mit dem Thermoplasten ausreichend verträglich sind, in Frage. Vorteilhaft ist, wenn die Korngröße und das Schüttgewicht des/der Extrusionsmasterbatches ähnlich der Korngröße und dem Schüttgewicht des Thermoplasten sind, so dass eine homogene Verteilung und damit eine homogener Weißgrad und somit eine homogene Transparenz erreicht werden.

In einer bevorzugten Ausführungsform enthält die Basisschicht (B) zur Erzielung des gewünschten Weißgrades und der gewünschten niedrigen Transparenz ein mit Polyester unverträgliches Polymer (anti-PET-Polymer). Geeignete mit Polyester unverträgliche Polymere erzeugen nach dem Streckprozess Vakuolen, welche über eine Lichtbrechung zu einer Weißfärbung der gestreckten Folie führen. Zur Erzielung der gewünschten Weißgrade (> 60) und der gewünschten niedrigen Transparenz (< 60 %) enthält die Basisschicht (B) in der bevorzugten Ausführungsform ein mit Polyester unverträgliches Polymer in einer Menge von minimal 2 Gew.-% bezogen auf das Gewicht der Basisschicht (B).

Beispiele für geeignete unverträgliche Polymere (anti-PET-Polymer) sind Polymere auf Basis von Ethylen (z. B. LLDPE, HDPE), Propylen (PP), Cycloolefinen (CO), Amiden (PA) oder Styrol (PS). In einer bevorzugten Ausführungsform wird als polyesterunverträgliches Polymer (anti-PET-Polymer) ein Copolymeres verwendet. Beispiele hierfür sind Copolymere auf Basis von Ethylen (C2/C3, C2/C3/C4- Copolymere), Propylen (C2/C3, C2/C3/C4- Copolymere), Butylen (C2/C3, C2/C3/C4- Copolymere) oder auf Basis von Cycloolefinen (Norbornen/Ethylen-, Tetracyclododecen/ Ethylen-Copolymere). In einer der besonders bevorzugten Ausführungsformen ist das mit Polyester unverträgliche Polymer (anti-PET-Polymer) ein Cycloolefincopolymer (COC). Solche Cycloolefincopolymere sind beispielsweise in der EP-A-1 068 949 oder in der J P 05-009319 beschrieben, auf die hier Bezug genommen wird.

Unter den Cycloolefincopolymeren sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind Cycloolefincopolymere (COC), die polymerisierte Einheiten acyclischer Olefine, insbesondere Ethylen, enthalten. Ganz besonders bevorzugt sind Norbonen/Ethylen- und Tetracyclododecen/Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren).

Die Cycloolefinpolymere weisen im Allgemeinen Glasübergangstemperaturen zwischen -20 und 400 °C auf. Zur Erzielung einer weißen Basisschicht (B) mit niedriger Transparenz sind solche Cycloolefincopolymere (COC) besonders geeignet, die eine Glasübergangstemperatur $T_g$ von größer als 70 °C, vorzugsweise größer als 90 °C und insbesondere größer als 110 °C aufweisen. Die Viskositätszahl (Dekalin, 135 °C, DIN 53 728) liegt zweckmäßig zwischen 0,1 und 200 ml/g, bevorzugt zwischen 50 und 150 ml/g.

Die Herstellung der Cycloolefincopolymere (COC) geschieht z. B. durch eine heterogene oder homogene Katalyse mit metallorganischen Verbindungen und ist in einer Vielzahl von Dokumenten beschrieben. Geeignete Katalysatorsysteme, basierend auf Mischkatalysatoren aus Titan- bzw. Vanadiumverbindungen in Verbindung mit Aluminiumorganylen, werden in der DD 109 224, DD 237 070 und der EP-A-0 156 464 beschrieben.

EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf Cycloolefincopolymere, hergestellt mit Katalysatoren, die auf löslichen Metallocenkomplexen basieren, wird besonders bevorzugt zurückgegriffen. Solche COC sind käuflich erhältlich; z. B. Topas® (Ticona, Frankfurt).

Zur Erzielung des gewünschten Weißgrades (> 60) und der gewünschten niedrigen Transparenz (< 60 %) enthält die Basisschicht (B) in der bevorzugten Ausführungsform ein Cycloolefincopolymer (COC) in einer Menge von minimal 2 Gew.-%, bevorzugt 4 bis 50 Gew.-% und besonders bevorzugt 6 bis 40 Gew.-%, bezogen auf das Gewicht der Basisschicht (B). Für die bevorzugte Ausführungsform der vorliegenden Erfindung ist es wesentlich, dass das Cycloolefincopolymer (COC) mit dem Polyester nicht verträglich ist und mit diesem keine homogene Mischung bildet. Das COC wird entweder als reines Granulat oder als granuliertes Konzentrat (Masterbatch) in die Basisschicht eingearbeitet, indem das Polyestergranulat oder -pulver mit dem COC bzw. dem COC-Masterbatch vorgemischt und anschließend dem Extruder zugeführt wird. Im Extruder werden die Komponenten weiter vermischt und auf Verarbeitungstemperatur erwärmt. Dabei ist es zweckmäßig, dass die Extrusionstemperatur oberhalb der Glasübergangstemperatur $T_g$ des COCs liegt, im allgemeinen mindestens 5 K, vorzugsweise 10 bis 180 K, insbesondere 15 bis 150 K, über der Glasübergangstemperatur $T_g$ des Cycloolefincopolymeren (COC).

In einer anderen bevorzugten Ausführungsform kann die Basisschicht (B) der Folie zur Verbesserung des Weißgrades und Reduzierung der Transparenz eine Kombination aus mindestens einem Weißpigment, einem mit Polyester weitgehend unverträglichen Polymer (anti-PET-Polymer) und optional einem optischen Aufheller enthalten. Besonders bevorzugt werden Weißgrad und Transparenz der Basisschicht (B) hierbei optimiert durch eine Kombination aus Titandioxid oder Bariumsulfat und einem Cycloolefincopolymer (COC), wobei das Cycloolefincopolymer (COC) eine Glasübergangstemperatur $T_g$ von größer als 70 °C, vorzugsweise größer als 90 °C und insbesondere größer als 110 °C aufweist.

Die Folie nach der vorliegenden Erfindung ist zu mindest zweischichtig aufgebaut. Sie besteht dann aus der Basisschicht (B) und der auf dieser durch Coextrusion aufgebrachten erfindungsgemäßen siegelbaren und peelfähigen Deckschicht (A).

Die durch Coextrusion auf die Basisschicht (B) aufgebrachte siegelbare und peelfähige Deckschicht (A) ist überwiegend, d. h. bevorzugt zu mindestens 80 Gew.-% aus Polyestern aufgebaut.

Erfindungsgemäß enthält die heißsiegelbare und peelfähige Deckschicht (A) Polyester auf Basis von aromatischen und aliphatischen Säuren und bevorzugt aliphatischen Diolen. Des Weiteren enthält die Deckschicht (A) anorganische und/oder organische Partikel in einer Konzentration von bevorzugt 1 bis10 Gew.-%.

Unter den Polyestern werden in der bevorzugten Ausführungsform Copolyester oder Blends aus Homo- und Copolyestern oder Blends aus verschiedenen Copolyestern verstanden, die auf Basis von aromatischen und aliphatischen Dicarbonsäuren und aliphatischen Diolen aufgebaut sind.

Beispiele für die erfindungsgemäß einsetzbaren aromatischen Dicarbonsäuren sind die Terephthalsäure, die Isophthalsäure, die Phthalsäure und die 2,6 Naphthalindicarbonsäure.

Beispiele für die erfindungsgemäß einsetzbaren aliphatischen Dicarbonsäuren sind die Bernsteinsäure, die Glutarsäure, die Adipinsäure, die Pimelinsäure, die Korksäure, die Azelainsäure und die Sebazinsäure.

Beispiele für die erfindungsgemäß einsetzbaren aliphatischen Diole sind Ethylenglykol, 1,3-Propandiol, 1,3-Butandiol, 1,4-Butandiol, 1,5-Pentandiol, 2,2-Dimethyl-1,3-Propandiol, Diethylenglycol, Triethylenglycol und 1,4-Cyclohexandimethanol.

Der Polyester für die Deckschicht (A) wird bevorzugt aus zwei Polyestern I und II hergestellt.

Der Anteil des Polyesters I, der aus einem oder mehreren aromatischen Dicarboxylaten und einem oder mehreren aliphatischen Alkylenen besteht, in der Deckschicht (A) beträgt bevorzugt 0 bis 50 Gew.-%. In der bevorzugten Ausführungsform beträgt der Anteil des Polyesters I 5 bis 45 Gew.-% und in der besonders bevorzugten Ausführungsform beträgt er 10 bis 40 Gew.-%.

Im Allgemeinen basiert der Polyester I der erfindungsgemäßen Deckschicht (A) auf den folgenden Dicarboxylaten und Alkylenen, jeweils bezogen auf die Gesamtdicarboxylat- bzw. Gesamtalkylenmenge:

70 bis 100 Mol-%, bevorzugt 72 bis 95 Mol-% und besonders bevorzugt 74 bis 93 Mol-% Terephthalat;
0 bis 30 Mol-%, bevorzugt 5 bis 28 Mol-% und besonders bevorzugt 7 bis 26 Mol-% Isophthalat;
mehr als 50 Mol-%, bevorzugt mehr als 65 Mol-% und besonders bevorzugt mehr als 80 Mol-% Ethyleneinheiten.

Eventuell vorhandene restliche Anteile stammen von anderen aromatischen Dicarbonsäuren und anderen aliphatischen Diolen, wie sie bereits zuvor für die Basisschicht (B) aufgelistet worden sind.

Ganz besonders bevorzugt sind solche Copolyester, bei denen der Anteil an Terephthalat-Einheiten 74 bis 88 Mol-%, der entsprechende Anteil an Isophthalat-Einheiten 12 bis 26 Mol-% (wobei die Dicarboxylatanteile sich zu 100 Mol-% ergänzen) und der Anteil an Ethyleneinheiten 100 Mol-% beträgt. D. h. es handelt sich um Polyethylen-terephthalat/ isophthalat.

In einer weiteren bevorzugten Ausführungsform besteht der Polyester I aus einer Mischung, welche einen Copolyester, aufgebaut aus Terephthalat-, Isophthalat- und aus Ethylen-Einheiten, und ein aromatisches Polyesterhomopolymeres, z. B. ein Polybutylenterephthalat, enthält.

Entsprechend der vorliegenden Erfindung beträgt der Anteil von Polyester II in der Deckschicht (A) bevorzugt 50 bis 100 Gew.-%. In der bevorzugten Ausführungsform beträgt der Anteil von Polyester II 55 bis 95 Gew.-% und in der besonders bevorzugten Ausführungsform beträgt er 60 bis 90 Gew.-%.

Bevorzugt besteht der Polyester II aus einem Copolymeren aus aliphatischen und aromatischen Säurekomponenten, bei welchem die aliphatischen Säurekomponenten bevorzugt 20 bis 90 Mol-%, insbesondere 30 bis 70 Mol-% und besonders bevorzugt 35 bis 60 Mol-% betragen, bezogen auf die Gesamtsäuremenge des Polyesters II. Der zu 100 Mol-% fehlende Dicarboxylatanteil stammt von aromatischen Säuren, bevorzugt der Terephthalsäure und/oder der Isophthalsäure sowie auf der glykolischen Seite von aliphatischen oder cycloaliphatischen oder aromatischen Diolen, wie sie bereits oben bezüglich der Basisschicht ausführlich beschrieben wurden.

Im Allgemeinen basiert der Polyester II der erfindungsgemäßen Deckschicht (A) bevorzugt zumindest auf den folgenden Dicarboxylaten und Alkylenen, jeweils bezogen auf die Gesamtdicarboxylat- bzw. Gesamtalkylenmenge:

20 bis 90 Mol -%, bevorzugt 30 bis 65 Mol-% und besonders bevorzugt 35 bis 60 Mol-% Azelat;
0 bis 50 Mol-%, bevorzugt 0 bis 45 Mol-% und besonders bevorzugt 0 bis 40 Mol-% Sebazat;
0 bis 50 Mol-%, bevorzugt 0 bis 45 Mol-% und besonders bevorzugt 0 bis 40 Mol-% Adipat;
10 bis 80 Mol-%, bevorzugt 20 bis 70 Mol-% und besonders bevorzugt 30 bis 60 Mol-% Terephthalat;
0 bis 30 Mol-%, bevorzugt 3 bis 25 Mol-% und besonders bevorzugt 5 bis 20 Mol-% Isophthalat;
mehr als 30 Mol-%, bevorzugt mehr als 40 Mol-% und besonders bevorzugt mehr als 50 Mol-% Ethylen oder Butylen.

Eventuell vorhandene restliche Anteile stammen von anderen aromatischen Dicarbonsäuren und anderen aliphatischen Diolen, wie sie bereits zuvor für die Basisschicht (B) aufgelistet worden sind, oder auch von Hydroxycarbonsäuren wie Hydroxybenzoesäure o.ä.

Durch das Vorhandensein von bevorzugt mindestens 10 Mol-% aromatischer Dicarbonsäure wird gewährleistet, dass das Polymer II ohne Verklebungen z. B. im Coextruder oder in der Längsstreckung verarbeitbar ist.

Bevorzugt enthält die Deckschicht (A) eine Mischung aus den Polyestern I und II. Gegenüber der Verwendung von nur einem Polyester mit vergleichbaren Komponenten und vergleichbaren Anteilen der Komponenten weist eine Mischung die folgenden Vorteile auf:

Die Mischung der beiden Polyester I und II ist von den jeweiligen Glasübergangstemperaturen ($T_g$) gesehen leichter zu verarbeiten (zu extrudieren). Wie Untersuchungen gezeigt haben, neigt die Mischung aus einem Polymeren mit einem hohen $T_g$ (Polyester I) und einem Polymeren mit einem niedrigen $T_g$ (Polyester II) weniger zum Verkleben im Einzug des Coextruders als ein einziges Polymer mit einer entsprechend gemischten $T_g$.

Die Polymerherstellung ist einfacher, weil man in der Regel nicht beliebig viele Dosierstationen für die Ausgangsstoffe zur Verfügung hat.

Außerdem können mit der Mischung praktisch gesehen die gewünschten Peeleigenschaften individueller eingestellt werden als bei Einsatz eines einzigen Polyesters.

Auch die Zugabe von Partikeln (siehe unten) gestaltet sich bei Polyester I einfacher als bei Polyester II.

Zweckmäßigerweise beträgt die Glasübergangstemperatur von Polyester I mehr als 50 °C. Bevorzugt beträgt die Glasübergangstemperatur von Polyester I mehr als 55 °C und besonders bevorzugt mehr als 60 °C. Ist die Glasübergangstemperatur von Polyester I kleiner als 50 °C, kann die Folie unter Umständen nicht verfahrenssicher hergestellt werden. Die Klebeneigung der Deckschicht (A) z. B. gegenüber Walzen kann dabei so groß sein, dass mit häufigen Folienabrissen, insbesondere in der Längsstreckung gerechnet werden muss. Die Folie kann sich dabei um die Walzen in der Längsstreckung wickeln, was zu beträchtlichen Schäden an der Maschine führen kann. Bei der Extrusion verklebt ein solcher Polyester leicht an den metallischen Wänden und führt damit zu Verstopfungen.

Zweckmäßigerweise beträgt die Glasübergangstemperatur von Polyester II weniger als 20 °C. Bevorzugt beträgt die Glasübergangstemperatur weniger als 15 °C und besonders bevorzugt weniger als 10 °C. Ist die Glasübergangstemperatur von Polyester II größer als 20 °C, so neigt die Folie beim Abziehen von der Menüschale vermehrt zum Einreißen oder zum Abreißen, was unerwünscht ist.

In einer bevorzugten Ausführungsform enthält die heißsiegelbare und peelfähige Deckschicht (A) darüber hinaus ein mit Polyester unverträgliches Polymer (anti-PET-Polymer). Entsprechend der vorliegenden Erfindung beträgt der Anteil des polyesterunverträglichen Polymeren (anti-PET-Polymer) bevorzugt 2 bis 19 Gew.-%, bezogen auf die Masse der Deckschicht (A). In einer bevorzugten Ausführungsform beträgt der Anteil des Polymeren 5 bis 17 Gew.-% und in der besonders bevorzugten Ausführungsform beträgt er 7 bis 16 Gew.-%, bezogen auf die Masse der Deckschicht (A).

Beispiele für geeignete unverträgliche Polymere wurden bereits für die Basisschicht (B) beschrieben. In einer der besonders bevorzugten Ausführungsformen ist das mit Polyester unverträgliche Polymer ein Cycloolefincopolymer (COC). Wie schon für die Basisschicht (B) beschrieben, sind auch hier Norbonen/Ethylen- und Tetracyclododecen/ Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren) ganz besonders bevorzugt.

Die Cycloolefinpolymere weisen im Allgemeinen Glasübergangstemperaturen zwischen -20 und 400 °C auf. Zur Verbesserung der Peeleigenschaften der Deckschicht (A) sind solche Cycloolefincopolymere (COC) besonders geeignet, die eine Glasübergangstemperatur von kleiner als 160 °C, bevorzugt kleiner als 120 °C und besonders bevorzugt kleiner als 80 °C aufweisen. Cycloolefincopolymere mit einer Glasübergangstemperatur von kleiner als 80 °C erzeugen im Wesentlichen keine Vakuolen, und werden daher gegenüber solchen mit einer Glasübergangstemperatur von größer 80 °C für die peelfähige Deckschicht (A) besonders bevorzugt. Vorzugsweise sollte die Glasübergangstemperatur oberhalb von 50 °C liegen, bevorzugt oberhalb von 55 °C, insbesondere oberhalb von 60 °C. Die Viskositätszahl (Dekalin, 135 °C, DIN 53 728) liegt zweckmäßigerweise zwischen 0,1 und 200 ml/g, bevorzugt zwischen 50 und 150 ml/g.

Auch für die peelfähige Deckschicht (A) wird besonders bevorzugt auf Cycloolefincopolymere, hergestellt mit Katalysatoren, die auf löslichen Metallocenkomplexen basieren, zurückgegriffen. Solche COC sind käuflich erhältlich; z. B. Topas® (Ticona, Frankfurt).

Erfindungsgemäß enthält die heißsiegelbare und peelfähige Deckschicht (A) anorganische und/oder organische Partikel. Entsprechend der vorliegenden Erfindung beträgt der Anteil der Partikel bevorzugt 1 bis 10 Gew.-%, bezogen auf die Masse der Deckschicht (A). In einer bevorzugten Ausführungsform beträgt der Anteil der Partikel 1,5 bis 9 Gew.-% und in der besonders bevorzugten Ausführungsform beträgt er 2,0 bis 8 Gew.-%, ebenfalls bezogen auf die Masse der Deckschicht (A).

Enthält die Deckschicht (A) der Folie dagegen Partikel in einer Konzentration von weniger als 1 Gew.-%, so ist ein positiver Einfluss auf das Abziehverhalten der Folie von der Menüschale in der Regel nicht gegeben, die Folie tendiert zum Ein- oder zum Abreißen. Enthält dagegen die Deckschicht (A) der Folie Partikel in einer Konzentration von mehr als 10 Gew.-%, so wird die Siegelung der Folie zu stark geschwächt.

Es hat sich als vorteilhaft erwiesen, wenn die Partikel in einer bestimmten Größe, in einer bestimmten Konzentration und in einer bestimmten Verteilung vorliegen. Daneben können auch Mischungen von zwei und mehreren verschiedenen Partikelsystemen oder Mischungen von Partikelsystemen in gleicher chemischer Zusammensetzung, aber unterschiedlicher Partikelgröße der Deckschicht (A) zugegeben werden.

Übliche Partikel (auch als "Pigmente" oder "Antiblockmittel" bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Acrylat-Partikel. Die Partikel können der Schicht in den jeweils vorteilhaften Konzentrationen, z. B. als glykolische Dispersion während der Polykondensation oder über Masterbatche bei der Extrusion, zugegeben werden.

Erfindungsgemäß bevorzugte Partikel sind synthetisch hergestellte, amorphe $SiO_2$-Partikel in kolloidaler Form. Diese Partikel werden hervorragend in die Polymermatrix eingebunden. Zur (synthetischen) Herstellung der $SiO_2$-Partikel (auch Silikagel genannt) werden zunächst Schwefelsäure und Natriumsilikat unter kontrollierten Bedingungen zur Bildung von Hydrosol miteinander gemischt. Dieses formt sich schließlich zu einer harten, durchsichtigen Masse, die als Hydrogel bekannt ist. Nach Absonderung des als Nebenprodukt anfallenden Natriumsulfats durch ein Waschverfahren kann das Hydrogel getrocknet und weiterverarbeitet werden. Durch Kontrolle des Waschwasser-pH-Wertes und der Trocknungsbedingungen können die wichtigen physikalischen Parameter, wie z. B. Porenvolumen, Porengröße und die Größe der Oberfläche des anfallenden Silikagels variiert werden. Die gewünschte Partikelgröße (z. B. den $d_{50}$-Wert) und die gewünschte Partikelgrößenverteilung (z. B. die SPAN98) erhält man durch geeignete Mahlung des Silikagels (z. B. mechanisch oder hydromechanisch). Solche Partikel können z. B. über die Firmen Grace, Fuji, Degussa oder Ineos bezogen werden.

Die Teilchen haben einen mittleren Partikeldurchmesser $d_{50}$ von 2,5 bis 12,0 $\mu$m, insbesondere von 3,0 bis 10,0 $\mu$m und besonders bevorzugt von 3,5 bis 8,0 $\mu$m. Bei der Verwendung von Teilchen mit einem Durchmesser, der unterhalb 2,5 $\mu$m liegt, ist ein positiver Einfluss der Partikel auf das Abziehverhalten der Folie von der Menüschale unter Umständen nicht gegeben. In diesem Fall neigt die Folie beim Abziehen von der Menüschale wiederum zum Ein- oder Weiterreißen, was unerwünscht ist. Teilchen mit einem Durchmesser größer als 12 $\mu$m verursachen in der Regel Filterprobleme.

In der heißsiegelbaren und peelfähigen Deckschicht (A) ist das Verhältnis aus Teilchengröße $d_{50}$ zur Schichtdicke $d_A$ der Deckschicht (A) ≥ 1. Insbesondere ist das Durchmesser/Schichtdicken-Verhältnis mindestens 1,1 und besonders bevorzugt mindestens 1,2. In diesen Fällen ist ein besonders positiver Einfluss der Partikel auf das Abziehverhalten der Folie von der Menüschale gegeben.

Es hat sich als besonders vorteilhaft erwiesen, in der heißsiegelbaren und peelfähigen Deckschicht (A) Partikel zu verwenden, deren Verteilung für den Partikeldurchmesser eine Streuung aufweist, die durch einen SPAN98 von ≤ 2,0 beschrieben wird (Definition des SPAN98, siehe Messvorschrift). Bevorzugt ist ein SPAN98 von $\leq$ 1,9 und besonders bevorzugt ist ein SPAN98 von $\leq$ 1,8. Enthält die Deckschicht (A) der Folie dagegen Partikel, deren SPAN98 größer als 2,0 ist, so werden die optischen Eigenschaften und die Siegeleigenschaften der Folie schlechter.

Weiterhin hat es sich als vorteilhaft erwiesen, die Rauhigkeit der heißsiegelbaren und peelfähigen Deckschicht (A) so einzustellen, dass ihr $R_a$-Wert bevorzugt größer als 60 nm ist. Bevorzugt ist die Rauhigkeit $R_a$ größer als 80 nm und besonders bevorzugt ist sie größer als 100 nm; die Obergrenze der Rauhigkeit sollte 400 nm, bevorzugt 350 nm, insbesondere 300 nm, nicht überschreiten. Dies kann durch die Auswahl der PartikelDurchmesser, deren Konzentration und die Variation der Schichtdicke gesteuert werden.

In einer besonders vorteilhaften dreischichtigen Ausführungsform (ABC) besteht die Folie dann aus der weißen Basisschicht (B), der erfindungsgemäßen Deckschicht (A) und einer der Deckschicht (A) gegenüberliegenden Deckschicht (C). Diese Deckschicht (C) kann aus den für die Basisschicht beschriebenen Polymeren bestehen, enthält bevorzugt jedoch keine Weißpigmente oder ein mit Polyester unverträgliches Polymer. Zur Verbesserung der Wickelbarkeit enthält die Deckschicht (C) die, wie bereits für Deckschicht (A) beschrieben, üblichen Partikel (auch als "Antiblockmittel" bezeichnet). Die Partikel der Deckschicht (C) sollten einen mittleren Partikeldurchmesser $d_{50}$ (= Median) von bevorzugt 1,5 bis 6 $\mu$m aufweisen. Es hat sich dabei als besonders zweckmäßig erwiesen, Teilchen mit einem mittleren Partikeldurchmesser $d_{50}$ von 2 bis 5 $\mu$m und besonders bevorzugt von 2,5 bis 4 $\mu$m zu verwenden. Die Partikel der Deckschicht (C) sollten bevorzugt eine Streuung aufweisen, die durch einen SPAN98 von $\leq$ 2,0 beschrieben wird. Bevorzugt ist der SPAN98 $\leq$ 1,9 und besonders bevorzugt ist der SPAN98 $\leq$ 1,8. Die Partikel der Deckschicht (C) sollten in der Regel in einer Konzentration von 0,1 bis 0,5 Gew.-% vorhanden sein. Bevorzugt beträgt die Konzentration der Partikel 0,12 bis 0,4 Gew.-% und besonders bevorzugt 0,15 bis 0,3 Gew.-%.

Die Deckschicht (C) erhöht den Glanz der Folie und verhindert den Abrieb der hochgefüllten weißen Basisschicht (B). Der Glanz der Folienoberfläche (C) bei einer dreischichtigen Folie ist bevorzugt größer als 100 (gemessen nach DIN 67530 in Anlehnung an ASTM-D 523-78 und ISO 2813 mit Einstrahlwinkel 20°). In einer bevorzugten Ausführungsform beträgt der Glanz dieser Seite mehr als 110 und in einer besonders bevorzugten Ausführungsform mehr als 120. Diese Folienoberfläche eignet sich daher insbesondere für eine weitere funktionelle Beschichtung, für die Bedruckung oder für die Metallisierung.

Zwischen der Basisschicht und den Deckschichten kann sich gegebenenfalls noch eine Zwischenschicht befinden. Diese kann wiederum aus den für die Basisschicht beschriebenen Polymeren bestehen. In einer besonders bevorzugten Ausführungsform besteht die Zwischenschicht aus den für die Basisschicht verwendeten Polyestern. Die Zwischenschicht kann auch die unten beschriebenen üblichen Additive enthalten. Die Dicke der Zwischenschicht ist im Allgemeinen größer als 0,3 $\mu$m und liegt vorzugsweise im Bereich von 0,5 bis 15 $\mu$m, insbesondere im Bereich von 1,0 bis 10 $\mu$m, besonders bevorzugt im Bereich von 1,0 bis 5 $\mu$m.

Bei der zweischichtigen und der besonders vorteilhaften dreischichtigen Ausführungsform der erfindungsgemäßen Folie liegt die Dicke der Deckschicht (A) bevorzugt im Bereich von 0,7 bis 10,0 $\mu$m, insbesondere im Bereich von 0,8 bis 8,0 $\mu$m und besonders bevorzugt im Bereich von 0,8 bis 6,0 $\mu$m. Beträgt die Dicke der Deckschicht (A) mehr als 10,0 $\mu$m, so wächst die Peelkraft deutlich an und liegt nicht mehr im bevorzugten Bereich. Darüber hinaus wird das Peelverhalten der Folie beeinträchtigt. Beträgt die Dicke der Deckschicht (A) dagegen weniger als 0,7 $\mu$m, so hat die Folie in der Regel nicht mehr die gewünschten Peeleigenschaften.

Die Dicke der anderen, nicht siegelbaren Deckschicht (C) kann gleich der Deckschicht (A) sein oder von dieser verschieden; ihre Dicke liegt im Allgemeinen zwischen 0,5 und 5 $\mu$m.

Die Gesamtdicke der erfindungsgemäßen Polyesterfolie kann innerhalb weiter Grenzen variieren. Sie beträgt bevorzugt 3 bis 200 $\mu$m, insbesondere 4 bis 150 $\mu$m, vorzugsweise 5 bis 100 $\mu$m, wobei die Basisschicht (B) einen Anteil von vorzugsweise 45 bis 97 % an der Gesamtdicke hat.

Die Basisschicht und die anderen Schichten können zusätzlich übliche Additive, wie z. B. Stabilisatoren (UV, Hydrolyse), flammhemmende Stoffe oder Füller, enthalten. Sie werden zweckmäßig dem Polymer bzw. der Polymermischung bereits vor dem Aufschmelzen zugesetzt.

Gegenstand der vorliegenden Erfindung ist auch ein Verfahren zur Herstellung der Folie. Zur Herstellung der erfindungsgemäßen heißsiegelbaren und peelfähigen Deckschicht (A) werden zweckmäßiger Weise die jeweiligen Polymere (Polyester I, Polyester II, ggf. weitere Polymere wie z. B. polyesterunverträgliches Polymer (anti-PET-Polymer), Masterbatch(e) für Partikel) direkt dem Extruder für die Deckschicht (A) zugeführt. Die Materialien lassen sich bei etwa 200 bis 280 °C extrudieren. Aus verfahrenstechnischer Sicht (Durchmischung der verschiedenen Komponenten) hat es sich dabei als besonders günstig erwiesen, wenn die Extrusion der Polymere für die Deckschicht (A) mit einem Zweischneckenextruder mit Entgasungsmöglichkeit durchgeführt wird.

Die Polymere für die Basisschicht (B) und für die eventuell vorhandene weitere Deckschicht (C) und gegebenenfalls die Zwischenschicht werden zweckmäßig über weitere Extruder dem (Coextrusions-) System zugeführt. Die Weißpigmente für die weiße Basisschicht (B) können mittels der Masterbatchtechnologie über den für Polyester üblichen Trocknungsprozess dem Extruder für die Basisschicht (B) zugeführt werden. Das polyesterunverträgliche Polymer (anti-PET-Polymer) für die weiße Basisschicht (B) wird bevorzugt mittels eines so genannten Sidefeeders unmittelbar vor der Extrudereinzugszone den getrockneten Polyester-Chips zudosiert. Die Verwendung eines Sidefeeders verhindert das Zusammenkleben eines polyesterunverträglichen Polymers mit niedrigem Erweichungs- oder Schmelzpunkt bei für Polyester üblichen Trocknungsbedingungen.

Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung der Folie wird im Allgemeinen sequentiell durchgeführt. Eine simultane Streckung der Folie ist auch möglich, ist aber nicht notwendig. Bei der sequenziellen Streckung wird vorzugsweise erst in Längsrichtung (d. h. in Maschinenrichtung) und anschließend in Querrichtung (d. h. senkrecht zur Maschinenrichtung) gestreckt. Das Strecken in Längsrichtung lässt sich mit Hilfe zweier entsprechend dem angestrebten Streckverhältnis verschieden schnell rotierender Walzen durchführen. Zum Querstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung (machine direction orientation = MDO) in einem Temperaturbereich von ca. 60 bis 130 °C (Aufheiztemperaturen 60 bis 130 °C), und in Querrichtung (transverse direction orientation = TDO) in einem Temperaturbereich von ca. 90 °C (Beginn der Streckung) bis 140 °C (Ende der Streckung) durchgeführt. Das Längsstreckverhältnis liegt bevorzugt im Bereich von 2:1 bis 5,5:1, insbesondere von 2,3:1 bis 5,0:1. Das Querstreckverhältnis liegt bevorzugt im Bereich von 2,4:1 bis 5,0:1, insbesondere von 2,6:1 bis 4,5:1.

Der bevorzugte Temperaturbereich, bei der die biaxiale Streckung durchgeführt wird, beträgt bei der Längsstreckung (MDO) 60 bis 120 °C. Die Aufheiztemperaturen der Folie in der Längsstreckung liegen dabei in einem Bereich von 60 bis 115 °C. Bei der Querstreckung (TDO) liegen die Temperaturen der Folie bevorzugt in einem Bereich von 90 °C (Beginn der Streckung) bis 140 °C (Ende der Streckung). Das Längsstreckverhältnis liegt bei diesem bevorzugten Temperaturbereich im Bereich von 2,0:1 bis 5,0:1, bevorzugt von 2,3:1 bis 4,8: 1. Das Querstreckverhältnis liegt allgemein im Bereich von 2,4:1 bis 5,0:1, bevorzugt von 2,6:1 bis 4,5:1.

Der besonders bevorzugte Temperaturbereich, bei der die biaxiale Streckung durchgeführt wird, beträgt bei der Längsstreckung (MDO) 60 bis 110 °C. Die Aufheiztemperaturen der Folie in der Längsstreckung liegen dabei in einem Bereich von 60 bis 105 °C. Bei der Querstreckung (TDO) liegen die Temperaturen der Folie in einem Bereich von 90 °C (Beginn der Streckung) bis 140 °C (Ende der Streckung). Das Längsstreckverhältnis liegt bei diesem bevorzugten Temperaturbereich im Bereich von 2,0:1 bis 4,8:1, bevorzugt von 2,3:1 bis 4,6:1. Das Querstreckverhältnis liegt allgemein im Bereich von 2,4:1 bis 5,0:1, bevorzugt von 2,6:1 bis 4,5:1.

Mit den bevorzugten und insbesondere mit den besonders bevorzugten Temperaturen in der MDO wird dem klebrigen Verhalten von Deckschicht (A) auf Walzen (metallische, keramische oder besonders beschichtete Walzenoberflächen) besonders gut Rechnung getragen.

Vor der Querstreckung kann man eine oder beide Oberflächen der Folie nach den an sich bekannten Verfahren in-line beschichten. Die In-Line-Beschichtung kann beispielsweise zu einer verbesserten Haftung zwischen einer Metallschicht oder einer Druckfarbe und der Folie, zu einer Verbesserung des antistatischen Verhaltens, des Verarbeitungsverhaltens oder auch zur weiteren Verbesserung von Barriereeigenschaften der Folie führen. Letzteres wird beispielsweise durch Auftragung von Barrierebeschichtungen wie EVOH, PVOH o. ä. erhalten. Vorzugsweise werden solche Schichten dann auf die nicht siegelbare Oberfläche, z. B. die Oberfläche (C), der Folie aufgetragen.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Ein weiterer Vorteil der Erfindung besteht darin, dass die Herstellungskosten der erfindungsgemäßen Folie nicht wesentlich über denen einer Folie aus Standardpolyester liegen. Daneben ist bei der Herstellung der Folie gewährleistet, dass Verschnittmaterial, das bei der Folienherstellung im Betrieb immanent anfällt, als Regenerat in einer Menge von bis zu ca. 60 Gew.-%, bevorzugt 5 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich hervorragend zum Verpacken von Nahrungs- und Genussmitteln, insbesondere zur Verpackung von Nahrungs- und Genussmitteln in Menüschalen, bei denen peelfähige Polyesterfolien zum Öffnen der Verpackung verwendet werden.

Die nachstehende Tabelle (Tabelle 1) fasst die wichtigsten bevorzugten Folieneigenschaften noch einmal zusammen.

**Tabelle 1**

| Deckschicht (A) | Erfindungsgemäßer Bereich | Bevorzugt | Besonders bevorzugt | Einheit | Messmethode |
|---|---|---|---|---|---|
| Anteil Einheiten im erfindungsgemäßen Polyester, aufgebaut aus aromatischen Dicarbonsäuren | 12 bis 89 | 30 bis 84 | 40 bis 82 | Mol.-% | |
| Anteil Einheiten im erfindungsgemäßen Polyester, aufgebaut aus aliphatischen Dicarbonsäuren | 11 bis 88 | 16 bis 70 | 18 bis 60 | Mol.-% | Messmethode |
| Polyester I | 0 bis 50 | 5 bis 45 | 10 bis 40 | Gew.-% | |
| Polyester II | 50 bis 100 | 55 bis 95 | 60 bis 90 | Gew.-% | |
| Partikeldurchmesser $d_{50}$ | 2,5 bis 12 | 3,0 bis 10 | 3,5 bis 8 | $\mu$m | |
| Füllstoffkonzentration | 1,0 bis 10,0 | 1,5 bis 9,0 | 2,0 bis 8,0 | Gew.-% | |
| Dicke der Deckschicht A | 0,7 bis 10,0 | 0,8 bis 8,0 | 0,8 bis 6,0 | $\mu$m | |
| Partikeldurchmesser/ Schichtdicken-Verhältnis | >/= 1,0 | >/= 1,1 | >/= 1,2 | | |
| Dicke der Folie | 3 bis 200 | 4 bis 150 | 5 bis 100 | $\mu$m | |
| **Eigenschaften** | | | | | |
| Mindestsiegeltemperatur von DS (A) gegen APETICPET oder PET-Menüschalen | 165 | 160 | 155 | °C | |
| Siegelnahtfestigkeit von DS (A) gegen APET/ CPET oder PET-Menüschalen | 1,0 bis 8 | 2,0 bis 8 | 2,3 bis 8 | N/15 mm | |
| Glanz der Deckschichten A bzw. C | > 70 bzw. > 100 | > 75 bzw. > 110 | > 80 bzw. > 120 | | DIN 67530 |
| Weißgrad der Folie | <20 | <16 | <12 | % | nach Berger |
| Transparenz (Lichttransmission) | <60 | <55 | <50 | % | ASTM D 1003 |
| DS: Deckschicht, >/=: größer/gleich | | | | | |

Zur Charakterisierung der Rohstoffe und der Folien wurden im Rahmen der vorliegenden Erfindung die folgenden Messmethoden benutzt:

Messung des mittleren Durchmessers $d_{50}$

Die Bestimmung des mittleren Durchmessers $d_{50}$ wurde mittels Laser auf einem Malvern Master Sizer (Fa. Malvern Instruments Ltd., UK) mittels Laserscannung durchgeführt (andere Messgeräte sind z. B. Horiba LA 500 oder Sympathec Helos, welche das gleiche Messprinzip verwenden). Die Proben wurden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse den gewünschten $d_{50}$-Wert (auch Median genannt).

Messung der SPAN98

Die Bestimmung des Streumaßes, der SPAN98, wurde mit dem gleichen Messgerät durchgeführt, wie oben bei der Bestimmung des mittleren Durchmessers $d_{50}$ beschrieben. Der SPAN98 ist dabei wie folgt definiert:

$$SPAN98 = \frac{d_{98} - d_{10}}{d_{50}}$$

Der Ermittlung von $d_{98}$ und $d_{10}$ wird wiederum die (relative) Summenkurve der Partikelgrößenverteilung (s.o. "Messung des mittleren Durchmessers $d_{50}$) zu Grunde gelegt. Der Schnittpunkt des 98 % Ordinatenwertes mit der Summenkurve liefert auf der Abszissenachse sofort den gewünschten $d_{98}$-Wert und der Schnittpunkt des 10 % Ordinatenwertes mit der Summenkurve liefert auf der Abszissenachse den gewünschten $d_{10}$-Wert.

SV-Wert

Der SV-Wert des Polymers wurde durch die Messung der relativen Viskosität ($\eta_{rel}$) einer 1%-igen Lösung in Dichloressigsäure in einem Ubbelohde-Viskosimeter bei 25 °C bestimmt. Der SV-Wert ist wie folgt definiert:

$$SV = (\eta_{rel} - 1) \cdot 1000.$$

Glasübergangstemperaturen $T_g$

Die Glasübergangstemperatur $T_g$ wurde anhand von Folienproben mit Hilfe der DSC (Differential Scanning Calorimetry) bestimmt. Verwendet wurde ein DSC 1090 der Fa. Perkin-Elmer. Die Aufheizgeschwindigkeit betrug 20 K/min und die Einwaage ca. 12 mg. Um die thermische Vorgeschichte zu eliminieren, wurden die Proben zunächst auf 300 °C aufgeheizt, 5 Minuten gehalten und dann anschließend mit flüssigem Stickstoff abgeschreckt. Aus dem Thermogramm wurde die Temperatur für den Glasübergang $T_g$ als die Temperatur bei halber Stufenhöhe entnommen.

Siegelnahtfestigkeit (Peelkraft)

Zur Bestimmung der Siegelnahtfestigkeit wird ein Folienstreifen (100 mm lang x 15 mm breit) auf einen entsprechenden Streifen der Menüschale gelegt und bei der eingestellten Temperatur von > 140 °C, einer Siegelzeit von 0,5 s und einem Siegeldruck von 4 bar (Siegelgerät HSG/ET der Firma Brugger, DE), beidseitig beheizte Siegelbacke) gesiegelt. Entsprechend Figur 2 werden die gesiegelten Streifen in die Zugprüfmaschine (z. B. Fa. Zwick , DE) eingespannt und die 180°-Siegelnahtfestigkeit, d. h. die zur Auftrennung der Prüfstreifen benötigte Kraft, mit einer Abzugsgeschwindigkeit von 200 mm/min bestimmt. Die Siegelnahtfestigkeit wird in N pro 15 mm Folienstreifen angegeben (z. B. 3 N/15 mm).

Bestimmung der Mindestsiegeltemperatur

Mit dem Siegelgerät HSG/ET der Firma Brugger werden wie zuvor bei der Messung der Siegelnahtfestigkeit beschrieben, heißgesiegelte Proben (Siegelnaht 15 mm x 100 mm) hergestellt, wobei die Folie bei unterschiedlichen Temperaturen mit Hilfe zweier beheizter Siegelbacken bei einem Siegeldruck von 4 bar und einer Siegeldauer von 0,5 s gesiegelt wird. Die 180° Siegelnahtfestigkeit wurde wie bei der Bestimmung der Siegelnahtfestigkeit gemessen. Die Mindestsiegeltemperatur ist die Temperatur, bei der eine Siegelnahtfestigkeit von mindestens 1,0 N/15 mm erreicht wird.

Rauhigkeit

Die Rauhigkeit $R_a$ der Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

Weißgrad

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ®ELREPHO der Firma Zeiss, Oberkochem (DE), Normlichtart C, 2° Normalbeobachter. Der Weißgrad wird als WG = RY + 3RZ - 3RX definiert. WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

Lichttransmission/Transparenz

Unter der Lichttransmission/Transparenz ist das Verhältnis des insgesamt durchgelassenen Lichtes zur einfallenden Lichtmenge zu verstehen. Die Lichttransmission wird mit dem Messgerät "Hazegard plus" (Fa. Pausch-Messtechnik, Haan, DE) nach ASTM D 1003 gemessen.

Glanz

Der Glanz der Folie wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Reißfestigkeit

Die Reißfestigkeit der Folie wurde nach DIN 53455 gemessen. Die Prüfgeschwindigkeit ist 1 %/min; 23 °C; 50 % r.F.

E-Modul

Der E-Modul der Folie wurde nach DIN 53457 gemessen. Die Prüfgeschwindigkeit ist 1 %/min; 23 °C; 50 % r.F.

Schrumpf

Der Schrumpf der Folie wurde nach DIN 40634 bestimmt. Die Prüfbedingungen sind 150 °C, 15 min.
Im Folgenden wird die Erfindung anhand von Beispielen näher erläutert.

Beispiel 1

Zur Herstellung einer weißen peelfähigen Folie wurde die Basisschicht (B) aus Polyethylenterephthalat mit 7,5 Gew.-% Weißpigment Titandioxid ausgerüstet. Das Titandioxid wurde über einen Masterbatch der Fa. Sukano (Schindellegi (CH)) zugegeben. Das Masterbatch setzte sich aus Polyethylenterephthalat und 50 Gew.-% Titandioxid (mittlerer Teilchendurchmesser Titandioxid ca. 0,3 μm) zusammen. Chips aus Polyethylenterephthalat und dem Masterbatch wurden bei 160 °C auf eine Restfeuchte von weniger als 50 ppm getrocknet und dem Extruder für die Basisschicht (B) zugeführt. Ebenfalls wurden Chips aus Polyethylenterephthalat und Partikel dem Extruder (Zweischneckenextruder mit Entgasung) für die nicht siegelfähige Deckschicht (C) zugeführt. Entsprechend den in untenstehender Tabelle aufgeführten Verfahrensbedingungen wurden die Rohstoffe in den beiden jeweiligen Extrudern aufgeschmolzen und homogenisiert.
Daneben wurde für die heißsiegelbare und peelfähige Deckschicht (A) eine Mischung bestehend aus Polyester I, Polyester II und SiO₂-Partikeln hergestellt. In Tabelle 2 sind die jeweiligen Anteile der in beiden Polyestern I und II enthaltenen Dicarbonsäuren und Glykole in Mol-% und die jeweiligen Anteile der in der Mischung enthaltenen Komponenten in Gew.-% angegeben. Die Mischung wurde dem Zweischneckenextruder mit Entgasung für die siegelbare und peelfähige Deckschicht (A) zugeführt. Entsprechend den in untenstehender Tabelle angeführten Verfahrensbedingungen wurden die Rohstoffe in dem Zweischneckenextruder aufgeschmolzen und homogenisiert.
Dann wurden durch Coextrusion in einer Dreischichtdüse die drei Schmelzeströme übereinander geschichtet und über die Düsenlippe ausgestoßen. Der resultierende Schmelzefilm wurde abgekühlt und anschließend über eine stufenweise Orientierung in Längs- und Querrichtung eine weiße, dreischichtige Folie mit ABC-Aufbau in einer Gesamtdicke von 25 $\mu$m hergestellt. Die Dicke der Deckschicht (A) beträgt 3,9 $\mu$m. Die Dicke der Deckschicht (C) beträgt 1,1 $\mu$m. (vgl. auch Tabelle 2).

Deckschicht (A), Mischung aus:

| | |
|---|---|
| 50,0 Gew.-% | Polyester I (= Copolymeres aus 78 Mol-% Ethylenterephthalat, 22 Mol-% Ethylenisophthalat) mit einem SV-Wert von 850. Die Glasübergangstemperatur von Polyester I beträgt ca. 75 °C. Polyester I enthält darüber hinaus 10,0 Gew.-% ®Sylysia (synthetisches $SiO_2$, Fuji, Japan) mit einem Partikeldurchmesser von $d_{50}$ = 4,5 $\mu$m und einem SPAN98 von 1,8. Das Verhältnis von Partikeldurchmesser $d_{50}$ zu Deckschichtdicke $d_{(A)}$ beträgt 1,15:1 (vgl. Tabelle 2); |
| 50 Gew.-% | Polyester II (= Copolymeres enthaltend 40 Mol-% Ethylenazelat, 50 Mol-% Ethylentherephthalat, 10 Mol-% Ethylenisophthalat) mit einem SV-Wert von 1000. Die Glasübergangstemperatur von Polyester II beträgt ca. 0 °C. |

Basisschicht (B):

| | |
|---|---|
| 85 Gew.-% | Polyethylenterephthalat mit einem SV-Wert von 800; |
| 15 Gew.-% | Masterbatch der Fa. Sukano (Schindellegi (CH)) mit 50 Gew.-% Titandioxid (mittlerer Teilchendurchmesser Titandioxid ca. 0,3 $\mu$m) und 50 Gew.-% PET. |

Deckschicht (C), Mischung aus:

| | |
|---|---|
| 85 Gew.-% | Polyethylenterephthalat mit einem SV-Wert von 800; |
| 15 Gew.-% | Masterbatch aus 99 Gew.-% Polyethylenterephthalat (SV-Wert von 800) und 1,0 Gew.-% Sylobloc® 44 H (synthetisches $SiO_2$, Fa. Grace, Worms), $d_{50}$ = 2,5$\mu$m, SPAN98 = 1,9 |

Die Herstellungsbedingungen in den einzelnen Verfahrensschritten waren:

| Extrusion | Temperaturen | A-Schicht: | 230 | °C |
|---|---|---|---|---|
| | | B-Schicht: | 280 | °C |
| | | C-Schicht: | 280 | °C |
| | Temperatur der Abzugswalze | | 20 | °C |
| Längsstreckung | Aufheiztemperatur | | 70-100 | °C |
| | Strecktemperatur | | 102 | °C |
| | Längsstreckverhältnis | | 4,1 | |
| Querstreckung | Aufheiztemperatur | | 100 | °C |
| | Strecktemperatur | | 135 | °C |
| | Querstreckverhältnis | | 4,0 | |
| Fixierung | Temperatur | | 230 | °C |
| | Dauer | | 3 | s |

In Tabelle 3 sind die Eigenschaften der weißen Folie dargestellt. Laut Messungen (Spalte 2), beträgt die Mindestsiegeltemperatur der Folie gegenüber CPET-Menüschalen 152 °C. Die Folie wurde bei 160, 180 und 200 °C gegen die CPET-Menüschalen gesiegelt (Siegeldruck 4 bar, Siegelzeit 0,5 s). Anschließend wurden Streifen des Verbundes aus erfindungsgemäßer Folie und CPET-Menüschale mittels Spannungs-Dehnungstester entsprechend der vorgenannten Messvorschrift (vgl. Figur 2) auseinander gezogen. Für alle Siegeltemperaturen zeigte sich das gewünschte Abschälen der Folien von der Menüschale gemäß Figur 3b. Die gemessenen Siegelnahtfestigkeiten sind in Spalte 3 von Tab. 3 gelistet. Für alle Siegeltemperaturen wurden peelfähige Folien erhalten. Die Siegelnahtfestigkeiten liegen im unteren Bereich, d. h., dass sich die Folien ohne Kraftanstrengung von der Menüschale abziehen lassen. Weiterhin hatte die Folie die geforderten guten optischen Eigenschaften, zeigte das gewünschte Handling und das gewünschte Verarbeitungsverhalten.

Beispiel 2

Im Vergleich zu Beispiel 1 wurde die Zusammensetzung der Mischung für die siegelfähige Deckschicht (A) geändert. Die Zusammensetzung der einzelnen Komponenten blieb im Vergleich zu Beispiel 1 unverändert. Die Mischung besteht jetzt aus den folgenden Rohstoffanteilen:

- Polyester I = 40 Gew.-%

- Polyester II = 60 Gew.-%

Auf Grund des höheren Anteils von Polyester II in der Mischung wurden die Verfahrensparameter in der Längsstreckung modifiziert. Die neuen Bedingungen für die Längstreckung sind in untenstehender Tabelle aufgelistet.

| Längsstreckung | Aufheiztemperatur | | 70-95 | °C |
|---|---|---|---|---|
| | Strecktemperatur | | 97 | °C |
| | Längsstreckverhältnis | | 3,7 | |

Die Mindestsiegeltemperaturderweißen Folie gegenüber CPET-Menüschalen beträgt jetzt 150 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind höher als im Beipiel 1. Sie liegen in einem mittleren Bereich, so dass sich die Folie ohne wesentliche Kraftanstrengung von der Menüschale abziehen lässt. Die optischen Eigenschaften, das Handling und das Verarbeitungsverhalten der Folie waren wie in Beipiel 1.

Beispiel 3

Im Vergleich zu Beispiel 2 wurde das Weißpigment Titandioxid durch 18 Gew.-% Bariumsulfat (Blanc fixe® XR-HX, Sachtleben Chemie, DE) und 216 ppm optischen Aufheller (Tinopal®, Ciba-Geigy, Basel)ersetzt. Das Bariumsulfat und der optische Aufheller wurden als Masterbatch zugegeben. Das Masterbatch setzte sich aus Polyethylenterephthalat, 50 Gew.-% Bariumsulfat und 600 ppm optischem Aufheller zusammen. Chips aus Polyethylenterephthalat und dem Masterbatch wurden bei 160 °C auf eine Restfeuchte von weniger als 50ppm getrocknet und dem Extruder für die Basisschicht (B) zugeführt.

Basisschicht (B):

64 Gew.-%     Polyethylenterephthalat mit einem SV-Wert von 800

36 Gew.-%     Masterbatch mit 50 Gew.-% Bariumsulfat (®Blanc fixe XR-HX, Sachtleben Chemie) und 600 ppm optischen Aufheller (®Tinopal, Ciba-Geigy, Basel), Rest = PET.

Außerdem wurde die Zusammensetzung der Mischung für die siegelfähige Deckschicht (A) im Vergleich zu Beispiel 2 geändert. Die Zusammensetzung der einzelnen Komponenten blieb im Vergleich zu Beispiel 1 unverändert. Die Mischung besteht jetzt aus den folgenden Rohstoffanteilen:

- Polyester I = 30 Gew.-%
- Polyester II = 70 Gew.-%

Auf Grund des höheren Anteils von Polyester II in der Mischung wurden die Verfahrensparameter in der Längsstreckung modifiziert. Die neuen Bedingungen für die Längstreckung sind in untenstehender Tabelle aufgelistet.

| Längsstreckung | Aufheiztemperatur | | 70-90 | °C |
|---|---|---|---|---|
| | Strecktemperatur | | 93 | °C |
| | Längsstreckverhältnis | | 3,5 | |

Die Mindestsiegeltemperatur der weißen Folie gegenüber CPET-Menüschalen beträgt jetzt 149 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind vergleichbar zu Beispiel 1. Die weiße Folie zeigte einen hohen Weißgrad und eine sehr niedrige Transparenz. Das Handling und das Verarbeitungsverhalten der Folie waren wie in Beispiel 1.

Beispiel 4

Im Vergleich zu Beispiel 3 wurde die Zusammensetzung von Polyester II für die siegelfähige Deckschicht (A) geändert. Die verwendete Mischung in Deckschicht (A) besteht jetzt aus folgenden Rohstoffanteilen:

20 Gew.-% Polyester I, identisch zu Beispiel 1

80 Gew.-% Polyester II, ®Vitel1912, (Polyester, Bostik-Findley, USA; enthält die Dicarbonsäure-Bestandteile Azelainsäure, Sebazinsäure, Terephthalsäure, Isophthalsäure und weitere Dicarbonsäuren etwa im Molverhältnis 40/1/45/10/4 und als Diolkomponente mindestens 60 Mol-% Ethylenglykol). Die Glasübergangstemperatur von Polyester II beträgt ca. -1 °C.

Die Verfahrensparameter in der Längsstreckung entsprachen denjenigen in Beispiel 3. Die Mindestsiegeltemperatur der erfindungsgemäß hergestellten weißen Folie gegenüber CPET-Menüschalen beträgt jetzt 138 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Sie liegen in einem mittleren Bereich, so dass sich die Folie ohne große Kraftanstrengung von der Menüschale abziehen lässt. Die optischen Eigenschaften, das Handling und das Verarbeitungsverhalten der Folie waren wie in Beispiel 3.

Beispiel 5

Im Vergleich zu Beispiel 2 wurde das Weißpigment Titandioxid in der Basisschicht (B) durch eine Kombination von einem mit Polyester unverträglichem Polymer (anti-PET-Polymer), Bariumsulfat und einem optischen Aufheller ersetzt.

Chips aus Polyethylenterephthalat wurden bei 160 °C auf eine Restfeuchte von weniger als 50 ppm getrocknet und dem Extruder für die Basisschicht (B) zugeführt. Daneben wurden Chips aus Cycloolefincopolymeren (COC) der Fa. Ticona, Frankfurt: ®Topas 6015 (COC bestehend aus 2-Norbornen und Ethylen, siehe auch W. Hatke: Folien aus COC, Kunststoffe 87 (1997) 1, S. 58-62) mit einer Glasübergangstemperatur $T_g$ von 160 °C ebenfalls dem Extruder für die Basisschicht (B) zugeführt. Die COC Chips werden nicht über den für Polyester üblichen Trocknungsprozess dem Extruder für die Basisschicht (B) zugeführt, sondern mittels eines so genannten Sidefeeders unmittelbar vor der Extrudereinzugszone den getrockneten Polyethylenterephthalat Chips zudosiert. Der mengenmäßige Anteil des COCs in der Basisschicht (B) betrug 10 Gew.-%.

Außerdem enthielt die Basisschicht (B) 2,5 Gew.-% Bariumsulfat (®Blanc fixe XR-HX, Sachtleben Chemie) und 100 ppm optischen Aufheller (®Tinopal, Ciba-Geigy, Basel). Das Bariumsulfat und der optische Aufheller wurden als Masterbatch zugegeben. Das Masterbatch setzte sich aus Polyethylenterephthalat, 50 Gew.-% Bariumsulfat und 2000 ppm optischem Aufheller zusammen. Chips aus dem Masterbatch wurden bei 160 °C auf eine Restfeuchte von weniger als 50 ppm getrocknet und dem Extruder für die Basisschicht (B) zugeführt.

Basisschicht (B):

85 Gew.-% Polyethylenterephthalat mit einem SV-Wert von 800

10 Gew.-% Cycloolefincopolymeren (COC) der Fa. Ticona, Frankfurt: ®Topas 6015

5 Gew.-% Masterbatch mit 50 Gew.-% Bariumsulfat (®Blanc fixe XR-HX, Sachtleben Chemie) und 2000 ppm optischen Aufheller (®Tinopal, Ciba-Geigy, Basel)

Die Zusammensetzung der Mischung für die siegelfähige Deckschicht (A) und die Verfahrensparameter blieben im Vergleich zu Beispiel 2 ungeändert.

Die Mindestsiegeltemperatur der weißen Folie gegenüber CPET-Menüschalen beträgt 150 °C. Für alle Siegeltemperaturen zeigte sich das gewünschte Abschälen der Folien von der Menüschale gemäß Figur 3b. Die gemessenen Siegelnahtfestigkeiten sind in Spalte 3 gelistet. Für alle Siegeltemperaturen wurden wiederum peelfähige Folien erhalten. Die Siegelnahtfestigkeiten der erfindungsgemäßen Folien sind höher als im Beipiel 1. Sie liegen in einem mittleren Bereich, so dass sich die Folie ohne wesentliche Kraftanstrengung von der Menüschale abziehen lässt. Die weiße Folie zeigte einen hohen Weißgrad und eine niedrige Transparenz. Das Handling und das Verarbeitungsverhalten der Folie waren wie in Beipiel 1.

Vergleichsbeispiel 1

Im Vergleich zu Beispiel 1 wurde die Zusammensetzung der siegelfähigen Schicht (A) geändert. In der Deckschicht (A) wurde nur der auf Basis von aromatischen Säuren aufgebaute Polyester I verwendet:

Deckschicht (A):

100,0 Gew.-%    Polyester I (= Copolymeres aus 78 Mol-% Ethylenterephthalat und 22 Mol-% Ethylenisophthalat) mit einem SV-Wert von 850. Die Glasübergangstemperatur von Polyester I beträgt ca. 75 °C. Polyester I enthält darüber hinaus 5,0% ®Sylysia

Die Herstellungsbedingungen in den einzelnen Verfahrensschritten wurden in der Längsstreckung der Glasübergangstemperatur des Deckschichtrohstoffes angepasst:

| Längsstreckung | Aufheiztemperatur | | 70-115 | °C |
|---|---|---|---|---|
| | Strecktemperatur | | 120 | °C |
| | Längsstreckverhältnis | | 4,0 | |

In Tabelle 3 sind die Eigenschaften der Folie dargestellt. Obwohl die Siegelschicht hochpigmentiert ist und die Pigmente Schwachstellen in der Siegelschicht darstellen, wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Vergleichsbeispiel 2

Es wurde das Beispiel 3 (weiße siegelfähige Folie) aus der EP-B-0 515 096 nachgearbeitet. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Diagramm gemäß Figur 3a. Die Folie zeigt "weldable" Verhalten und ist damit für die Lösung der genannten Aufgabe ungeeignet.

Vergleichsbeispiel 3

Es wurde das Beispiel 5 aus der EP-A-0 035 835 nachgearbeitet. Diese Folie war transparent. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Vergleichsbeispiel 4

Es wurde das Beispiel 1 aus der EP-A-0 379190 nachgearbeitet. Diese Folie war transparent. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Vergleichsbeispiel 5

Es wurde das Beispiel 22 aus der EP-A-0 379190 nachgearbeitet. Diese Folie war transparent. In Tabelle 3 sind die Eigenschaften der Folie dargestellt. Es wurde für keine der angegebenen Siegeltemperaturen eine peelfähige Folie erhalten. Beim Abziehen der Folie von der Menüschale riss die Folie direkt ein und zeigte ein Kraft-Weg-Diagramm gemäß Figur 3a. Die Folie zeigt "weldable" Verhalten und ist damit für die Lösung der genannten Aufgabe ungeeignet.

Die Zusammensetzung der Folien ist in Tabelle 2, die gemessenen Folieneigenschaften sind in Tabelle 3 zusammengefasst.

**Tabelle 2**

| | Zusammensetzung Polyester I Mol-% | | | | Zusammensetzung Polyester II Mol-% | | | | | | | | Verhältnisse PI/PII Gew.-% | Glastemperaturen PI/PII °C | Folienaufbau | Foliendicke μm | Deckschicht-Dicken (A) μm | (C) μm | Partikel in (A) Durchmesser μm | SPAN 98 | Konzentration Gew.-% | Verhältnis d50/d(A) |
|---|---|---|---|---|---|---|---|---|---|---|---|---|---|---|---|---|---|---|---|---|---|---|
| | TS | IS | EG | NG | AzS | SeS | AdS | TS | IS | EG | BD | WS | | | | | | | | | | |
| **Beispiele** | | | | | | | | | | | | | | | | | | | | | | |
| 1 | 78 | 22 | 100 | | 40 | | | 50 | 10 | 100 | | | 50/50 | 75/0 | ABC | 25 | 3,9 | 1,1 | 4,5 | 1,8 | 5,00 | 1,15 |
| 2 | 78 | 22 | 100 | | 40 | | | 50 | 10 | 100 | | | 40/60 | 75/0 | ABC | 25 | 3 | 1,1 | 4,5 | 1,8 | 4,00 | 1,50 |
| 3 | 78 | 22 | 100 | | 40 | | | 50 | 10 | 100 | | | 30/70 | 75/0 | ABC | 25 | 3,3 | 1,1 | 4,5 | 1,8 | 3,00 | 1,36 |
| 4 | 78 | 22 | 100 | | 40 | | 1 | 45 | 10 | >60 | | 4 | 20/80 | 75/-1 | ABC | 25 | 3,4 | 1,1 | 4,5 | 1,8 | 2,00 | 1,32 |
| 5 | 78 | 22 | 100 | | 40 | | | 50 | 10 | 100 | | | 40/60 | 75/0 | ABC | 25 | 3 | 1,1 | 4,5 | 1,8 | 4,00 | 1,50 |
| **V-Beispiele** | | | | | | | | | | | | | | | | | | | | | | |
| 1 | 78 | 22 | 100 | | | | | | | | | | 100/0/0/ | 75 | ABC | 25 | 3,9 | 1,1 | 4,5 | 1,8 | 5 | 1,15 |
| 2 | 82 | 18 | 100 | | | | | | | | | | 100/0/0/ | 75 | AB | 250 | 40 | | 0,04 | | | <<1 |
| 3 | 82 | 18 | 100 | | | | | | | | | | 100/0/0/ | 75 | AB | 20 | 2,98 | | 1,5+5 | | 0,3 | 1,68 |
| 4 | | | | | | | 10 | 90 | | 100 | | | 0/100/0/ | ca. 50 | AB | 17,2 | 4,1 | | | | | - |
| 5 | 100 | | 85 | 15 | | 31,5 | 2,4 | 65 | 1,1 | 95,4 | 4,6 | | 50/50/50/ | ca. 20 | AB | 11,5 | 2,5 | | 2 | | 0,25 | 0,8 |

TS Terephthalat, IS Isophthalat, EG Ethylen, BD Butan, NG Neopentyl
AzS Azelat, SeS Sebazat, AdS Adipat, WS weitere Dicarbonsäuren und Glykole

**Tabelle 3**

| | | Menu-schale | Mindest-siegel-tempe-ratur °C | Siegelnahtfestigkeit gegenüber Menüschalen 160°C N/15mm | 180°C | 200°C | Schältest (= Peelverhal-ten) | Weißgrad | Transpa-renz % | Rauhigkeit Ra A-Seite nm | C-Seite |
|---|---|---|---|---|---|---|---|---|---|---|---|
| Beispiele | 1 | CPET | 152 | 1,7 | 2,4 | 4,4 | ++++ | 72 | 50 | 196 | 60 |
| | 2 | CPET | 150 | 2,1 | 3,8 | 7,1 | ++++ | 72 | 50 | 162 | 60 |
| | 3 | CPET | 149 | 1,5 | 2,6 | 5,1 | ++++ | 85 | 30 | 173 | 60 |
| | 4 | CPET | 138 | 4,8 | 4,7 | 6,1 | ++++ | 85 | 30 | 186 | 60 |
| | 5 | CPET | 150 | 2,1 | 3,8 | 7,1 | ++++ | 77 | 40 | 162 | 60 |
| V-Beispiele | 1 | CPET | 105 | 3,5 | 5,0 | 8,0 | - | 72 | 50 | 310 | 60 |
| | 2 | CPET | 109 | 15,0 | 18,0 | 23,0 | - | 103 | 12 | 25 | 50 |
| | 3 | CPET | 109 | 4,2 | 5,5 | 8,1 | - | - | - | 69 | 25 |
| | 4 | CPET | 112 | 2,0 | 4,0 | 6,0 | - | - | - | 33 | 20 |
| | 5 | CPET | 110 | 3,0 | 4,0 | 5,0 | - | - | - | 120 | 22 |

Schältest: ++++ : Bei allen Siegeltemperaturen wird Folie von der Menuschale "gepeelt", ohne dass dabei die Folie ein- oder weiterreißt. Einwandfreies, sattes, sauberes Peelen der Folie von Menuschale, auch im oberen Temperarurbereich bei hoher Siegelnahtfestigkeit.

‑ : Bei allen Siegeltemperaturen reißt die Folie beim Abziehen von der Menüschale ein.

EP 1 529 636 B1

**Patentansprüche**

1. Coextrudierte, biaxial orientierte Polyesterfolie, welche eine weiße Basisschicht (B) und eine heißsiegelbare und gegenüber APET/CPET und CPET peelfähige Deckschicht (A) aufweist, wobei die Deckschicht (A)

> a) 80 bis 99 Gew.-% Polyester und
> b) 1 bis 10 Gew.-% anorganische und/oder organische Partikel mit einem mittleren Durchmesser $d_{50}$ von 2,5 bis 12,0 $\mu$m
> enthält und wobei
> c) der Polyester zu 12 bis 89 Mol-% aus Einheiten aufgebaut ist, die auf mindestens eine aromatische Dicarbonsäure und zu 11 bis 88 Mol-% aus Einheiten aufgebaut ist, die auf mindestens eine aliphatische Dicarbonsäure zurückgehen,
> wobei die Summe der dicarbonsäureabgeleiteten Molprozente 100 ergibt, und
> d) das Verhältnis aus Teilchengröße $d_{50}$ der Partikel und Schichtdicke $d_A$ der Deckschicht (A) größer/gleich 1 ist,

und die Basisschicht (B) ein anorganisches Weißpigment und/oder ein mit Polyester unverträgliches Polymer enthält.

2. Polyesterfolie nach Anspruch 1, **dadurch gekennzeichnet, dass** die Schichtdicke der Deckschicht (A) $d_A$ 0,7 bis 10 $\mu$m beträgt.

3. Polyesterfolie nach Anspruch 1 oder 2, **dadurch gekennzeichnet, dass** die aromatischen Dicarbonsäuren ausgewählt sind aus einer oder mehreren der folgenden Substanzen: Terephthalsäure, Isophthalsäure und 2,6-Naphthalindicarbonsäure.

4. Polyesterfolie nach einem oder mehreren der Ansprüche 1 bis 3, **dadurch gekennzeichnet, dass** die aliphatischen Dicarbonsäuren ausgewählt sind aus einer oder mehreren der folgenden Substanzen: Bernsteinsäure, Pimelinsäure, Korksäure, Azelainsäure, Sebazinsäure, Glutarsäure und Adipinsäure.

5. Polyesterfolie nach einem oder mehreren der Ansprüche 1 bis 4, **dadurch gekennzeichnet, dass** der Polyester der Deckschicht (A) 12 bis 89 Mol-% Terephthalat, 0 bis 25 Mol-% Isophthalat, 11 bis 88 Mol-% Azelat, 0 bis 50 Mol-% Sebazat, 0 bis 50 Mol-% Adipat und mehr als 30 Mol-% Ethylen oder Butylen enthält, jeweils bezogen auf die Gesamtdicarboxylat- bzw. Gesamtalkylenmenge.

6. Polyesterfolie nach einem oder mehreren der Ansprüche 1 bis 5, **dadurch gekennzeichnet, dass** die Deckschicht (A) eine Mindestsiegeltemperatur gegenüber APET/CPET oder CPET Menüschalen von nicht mehr als 165 °C aufweist.

7. Polyesterfolie nach einem oder mehreren der Ansprüche 1 bis 6, **dadurch gekennzeichnet, dass** die Deckschicht (A) eine Siegelnahtfestigkeit gegenüber APET/CPET oder CPET Menüschalen von mindestens als 1 N/15 mm Folienbreite aufweist.

8. Polyesterfolie nach einem oder mehreren der Ansprüche 1 bis 7, **dadurch gekennzeichnet, dass** der Polyester der Deckschicht (A) aus zwei Polyestern I und II hergestellt wird.

9. Polyesterfolie nach Anspruch 8, **dadurch gekennzeichnet, dass** der Polyester I aus einem oder mehreren aromatischen Dicarboxylaten und einem oder mehreren aliphatischen Alkylenen besteht.

10. Polyesterfolie nach Anspruch 8 oder 9, **dadurch gekennzeichnet, dass** der Polyester I Terephthalat-, Isophthalat- und Ethyleneinheiten enthält.

11. Polyesterfolie nach einem oder mehreren der Ansprüche 8 bis 10, **dadurch gekennzeichnet, dass** der Anteil des Polyesters I in der Deckschicht (A) 0 bis 50 Gew.-% beträgt.

12. Polyesterfolie nach einem oder mehreren der Ansprüche 8 bis 11, **dadurch gekennzeichnet, dass** der Polyester I eine Glasübergangstemperatur von mehr als 50 °C aufweist.

13. Polyesterfolie nach einem oder mehreren der Ansprüche 8 bis 12, **dadurch gekennzeichnet, dass** der Polyester II aus einem oder mehreren aliphatischen und aus einem oder mehreren aromatischen Dicarboxylaten und aus einem oder mehreren aliphatischen Alkylenen besteht.

**14.** Polyesterfolie nach einem oder mehreren der Ansprüche 8 bis 13, **dadurch gekennzeichnet**, das der Polyester II Azelat-, Terephthalat-, Isophthalat- und Ethyleneinheiten enthält.

**15.** Polyesterfolie nach einem oder mehreren der Ansprüche 8 bis 14, **dadurch gekennzeichnet, dass** der Anteil des Polyesters II in der Deckschicht (A) 50 bis 100 Gew.-% beträgt.

**16.** Polyesterfolie nach einem oder mehreren der Ansprüche 8 bis 15, **dadurch gekennzeichnet, dass** der Polyester II eine Glasübergangstemperatur von weniger als 20 °C aufweist.

**17.** Polyesterfolie nach einem oder mehreren der Ansprüche 1 bis 16, **dadurch gekennzeichnet, dass** die Folie dreischichtig ist und einen A-B-C-Aufbau aufweist.

**18.** Polyesterfolie nach einem oder mehreren der Ansprüche 1 bis 17, **dadurch gekennzeichnet, dass** neben der Deckschicht (A) auch die Deckschicht (C) anorganische oder organische Partikel enthält.

**19.** Polyesterfolie nach einem oder mehreren der Ansprüche 1 bis 18, **dadurch gekennzeichnet, dass** die Partikel in der Deckschicht (A) einen SPAN 98 von ≤ 2,0 aufweisen.

**20.** Polyesterfolie nach einem oder mehreren der Ansprüche 1 bis 19, **dadurch gekennzeichnet, dass** die Basisschicht (B) zu mindestens 80 Gew.-% aus thermoplastischem Polyester besteht.

**21.** Polyesterfolie nach einem oder mehreren der Ansprüche 1 bis 20, **dadurch gekennzeichnet, dass** die Basisschicht (B) Terephthalat- und/oder Isophthalat- und Ethyleneinheiten enthält.

**22.** Polyesterfolie nach einem oder mehreren der Ansprüche 1 bis 21, **dadurch gekennzeichnet, dass** die Basisschicht (B) als Weißpigment Titandioxid oder Bariumsulfat enthält.

**23.** Polyesterfolie nach einem oder mehreren der Ansprüche 1 bis 22, **dadurch gekennzeichnet, dass** die Basisschicht (B) als mit Polyester unverträglichem Polymer ein Cycloolefincopolymer enthält.

**24.** Polyesterfolie nach einem oder mehreren der Ansprüche 1 bis 23, **dadurch gekennzeichnet, dass** der Weißgrad der Folie größer 60 und die Transparenz der Folie kleiner 60 % ist.

**25.** Verfahren zur Herstellung einer Polyesterfolie nach einem oder mehreren der Ansprüche 1 bis 24 umfassend die Schritte

a) Herstellen einer mehrschichtigen Folie durch Coextrusion und Ausformen der Schmelzen zu flachen Schmelzefilmen;
b) biaxiales Strecken der Folie und
c) Thermofixieren der gestreckten Folie.

**26.** Verwendung einer Polyesterfolie nach einem oder mehreren der Ansprüche 1 bis 24 als Verpackungsmaterial für Nahrungs- und Genussmittel oder als Deckelfolie für APET/CPET oder CPET Menüschalen.

**Claims**

**1.** A coextruded, biaxially oriented polyester film which has a white base layer (B) and has a heatsealable outer layer (A) that can be peeled from APET/CPET and from CPET, where
the outer layer (A) comprises

a) from 80 to 99 % by weight of polyester and
b) from 1 to 10 % by weight of inorganic and/or organic particles with a median diameter $d_{50}$ of from 2.5 to 12.0 $\mu$m, and where
c) the polyester is composed of from 12 to 89 mol% of units derived from at least one aromatic dicarboxylic acid and of from 11 to 88 mol% of units derived from at least one aliphatic dicarboxylic acid,
where the total of the dicarboxylic-acid-derived molar percentages is 100, and
d) the ratio calculated from the particle size $d_{50}$ of the particles and the layer thickness $d_A$ of the outer layer (A) is greater than or equal to 1,

and the base layer (B) comprises an inorganic white pigment and/or a polymer incompatible with polyester.

2. The polyester film as claimed in claim 1, wherein the thickness of the outer layer (A) $d_A$ is from 0.7 to 10 $\mu$m.

3. The polyester film as claimed in claim 1 or 2, wherein the aromatic dicarboxylic acids have been selected from one or more of the following substances: terephthalic acid, isophthalic acid, and 2,6-naphthalenedicarboxylic acid.

4. The polyester film as claimed in one or more of claims 1 to 3, wherein the aliphatic dicarboxylic acids have been selected from one or more of the following substances: succinic acid, pimelic acid, suberic acid, azelaic acid, sebacic acid, glutaric acid, and adipic acid.

5. The polyester film as claimed in one or more of claims 1 to 4, wherein the polyester of the outer layer (A) contains from 12 to 89 mol% of terephthalate, from 0 to 25 mol% of isophthalate, from 11 to 88 mol% of azelate, from 0 to 50 mol% of sebacate, from 0 to 50 mol% of adipate, and more than 30 mol% of ethylene or butylene, based in each case on total dicarboxylate and, respectively, total amount of alkylene.

6. The polyester film as claimed in one or more of claims 1 to 5, wherein the outer layer (A) has a minimum sealing temperature of not more than 165 °C for sealing against APET/CPET or CPET trays.

7. The polyester film as claimed in one or more of claims 1 to 6, wherein the outer layer (A) has a seal seam strength of at least 1 N/15 mm of film width against APET/CPET or CPET trays.

8. The polyester film as claimed in one or more of claims 1 to 7, wherein the polyester of the outer layer (A) is prepared from two polyesters I and II.

9. The polyester film as claimed in claim 8, wherein the polyester I is composed of one or more aromatic dicarboxylates and of one or more aliphatic alkylenes.

10. The polyester film as claimed in claim 8 or 9, wherein the polyester I contains terephthalate units, isophthalate units, and ethylene units.

11. The polyester film as claimed in one or more of claims 8 to 10, wherein the proportion of the polyester I in the outer layer (A) is from 0 to 50 % by weight.

12. The polyester film as claimed in one or more of claims 8 to 11, wherein the polyester I has a glass transition temperature above 50 °C.

13. The polyester film as claimed in one or more of claims 8 to 12, wherein the polyester II is composed of one or more aliphatic dicarboxylates and of one or more aromatic dicarboxylates, and of one or more aliphatic alkylenes.

14. The polyester film as claimed in one or more of claims 8 to 13 , wherein the polyester II contains azelate units, terephthalate units, isophthalate units, and ethylene units.

15. The polyester film as claimed in one or more of claims 8 to 14, wherein the proportion of the polyester II in the outer layer (A) is from 50 to 100 % by weight.

16. The polyester film as claimed in one or more of claims 8 to 15, wherein the polyester II has a glass transition temperature below 20 °C.

17. The polyester film as claimed in one or more of claims 1 to 16, which has three layers and has an A-B-C structure.

18. The polyester film as claimed in one or more of claims 1 to 17, wherein not only the outer layer (A) but also the outer layer (C) comprises inorganic or organic particles.

**19.** The polyester film as claimed in one or more of claims 1 to 18, wherein the particles in the outer layer (A) have a SPAN 98 of ≤ 2.0.

**20.** The polyester film as claimed in one or more of claims 1 to 19, wherein the base layer (B) is composed of at least 80 % by weight of thermoplastic polyester.

**21.** The polyester film as claimed in one or more of claims 1 to 20, wherein the base layer (B) contains terephthalate units and/or isophthalate units, and ethylene units.

**22.** The polyester film as claimed in one or more of claims 1 to 21, wherein the base layer (B) comprises, as white pigment, titanium dioxide or barium sulfate.

**23.** The polyester film as claimed in one or more of claims 1 to 22, wherein the base layer (B) comprises, as polymer incompatible with polyester, a cycloolefin copolymer.

**24.** The polyester film as claimed in one or more of claims 1 to 23, wherein the whiteness of the film is greater than 60 and the transparency of the film is smaller than 60 %.

**25.** A process for producing a polyester film as claimed in one or more of claims 1 to 24, encompassing the steps of

a) producing a multilayer film via coextrusion, and shaping of the melts to give flat melt films,
b) biaxial stretching of the film, and
c) heat-setting of the stretched film.

**26.** The use of a polyester film as claimed in one or more of claims 1 to 24 as packaging material for foods and other consumable items, or as lid film for APET/CPET or CPET trays.

**Revendications**

**1.** Film polyester coextrudé à orientation biaxiale qui présente une couche de base blanche (B) et une couche de couverture (A) thermoscellable et pelable au contact de APET/CPET et CPET, dans lequel la couche de couverture (A) contient

a) de 80 à 99% en poids de polyester, et
b) de 1 à 10% en poids de particules minérales et/ou organiques avec un diamètre moyen $d_{50}$ allant de 2,5 à 12,0 $\mu$m,
et dans lequel
c) le polyester se compose à hauteur de 12 à 89% en moles d'unités qui se composent d'au moins un acide dicarboxylique aromatique et à hauteur de 11 à 88% en moles d'unités qui se ramènent à au moins un acide dicarboxylique aliphatique,
dans lequel la somme des pourcentages molaires déduits des acides dicarboxyliques donne 100, et
d) le rapport de la taille des particules $d_{50}$ et de l'épaisseur de couche $d_A$ de la couche de couverture (A) est supérieur ou égal à 1,

et dans lequel la couche de base (B) contient un pigment minéral blanc et/ou un polymère non miscible avec le polyester.

**2.** Film polyester selon la revendication 1, **caractérisé en ce que** l'épaisseur de couche $d_A$ de la couche de couverture (A) va de 0,7 à 10 $\mu$m.

**3.** Film polyester selon la revendication 1 ou 2, **caractérisé en ce que** les acides dicarboxyliques aromatiques sont choisis parmi une ou plusieurs des substances suivantes : acide téréphtalique, acide isophtalique et acide naphtyl 2,6-dicarboxylique.

**4.** Film polyester selon l'une quelconque des revendications 1 à 3, **caractérisé en ce que** les acides dicarboxyliques aliphatiques sont choisis parmi une ou plusieurs des substances suivantes : acide succinique, acide pimélique, acide subérique, acide azélaïque, acide sébacique, acide glutarique et acide adipique.

**5.** Film polyester selon l'une quelconque des revendications 1 à 4, **caractérisé en ce que** le polyester de la couche de couverture (A) contient de 12 à 89% en moles de téréphtalate, de 0 à 25% en moles d'isophtalate, de 11 à 88% en moles d'azélate, de 0 à 50% en moles de sébazate, de 0 à 50% en moles d'adipate et plus de 30% en mole d'éthylène ou de butène, rapportés respectivement à la quantité totale de dicarboxylate ou respectivement à la quantité totale d'alkylidènes.

**6.** Film polyester selon l'une quelconque des revendications 1 à 5, **caractérisé en ce que** la couche de couverture (A) présente une température de scellement minimale au contact de barquettes alimentaires en APET/CPET ou CPET inférieure à 165°C.

**7.** Film polyester selon l'une quelconque des revendications 1 à 6, **caractérisé en ce que** la couche de couverture (A) présente une résistance de scellement au contact de barquettes alimentaires en APET/CPET ou CPET de minimum 1 N / 15 mm de largeur de film.

**8.** Film polyester selon l'une quelconque des revendications 1 à 7, **caractérisé en ce que** le polyester de la couche de couverture (A) est fabriqué à partir des deux polyesters I et II.

**9.** Film polyester selon la revendication 8, **caractérisé en ce que** le polyester I se compose d'un ou plusieurs dicarboxylates aromatiques et d'un ou plusieurs alkylidènes aliphatiques.

**10.** Film polyester selon la revendication 8 ou 9, **caractérisé en ce que** le polyester I contient des unités téréphtalates, isophtalates et éthylènes.

**11.** Film polyester selon l'une quelconque des revendications 8 à 10, **caractérisé en ce que** la part du polyester I dans la couche de couverture (A) va de 0 à 50% en poids.

**12.** Film polyester selon l'une quelconque des revendications 8 à 11, **caractérisé en ce que** le polyester I présente une température de transition vitreuse supérieure à 50°C.

**13.** Film polyester selon l'une quelconque des revendications 8 à 12, **caractérisé en ce que** le polyester II se compose d'un ou plusieurs dicarboxylates aliphatiques et d'un ou plusieurs dicarboxylates aromatiques et d'un ou plusieurs alkylidènes aliphatiques.

**14.** Film polyester selon l'une quelconque des revendications 8 à 13, **caractérisé en ce que** le polyester II contient des unités azélates, téréphtalates, isophtalates et éthylènes.

**15.** Film polyester selon l'une quelconque des revendications 8 à 14, **caractérisé en ce que** la part du polyester II dans la couche de couverture (A) va de 50 à 100% en poids.

**16.** Film polyester selon l'une quelconque des revendications 8 à 15, **caractérisé en ce que** le polyester II présente une température de transition vitreuse inférieure à 20°C.

**17.** Film polyester selon l'une quelconque des revendications 1 à 16, **caractérisé en ce que** le film comporte trois couches et présente une structure A-B-C.

**18.** Film polyester selon l'une quelconque des revendications 1 à 17, **caractérisé en ce qu'**outre la couche de couverture (A), la couche de couverture (C) contient aussi des particules minérales ou organiques.

**19.** Film polyester selon l'une quelconque des revendications 1 à 18, **caractérisé en ce que** les particules dans la couche de couverture (A) présentent un SPAN 98 ≤ 2,0.

**20.** Film polyester selon l'une quelconque des revendications 1 à 19, **caractérisé en ce que** la couche de base (B) se compose d'au moins 80% en poids de polyester thermoplastique.

**21.** Film polyester selon l'une quelconque des revendications 1 à 20, **caractérisé en ce que** la couche de base (B) contient des unités téréphtalates et/ou isophtalates et éthylènes.

**22.** Film polyester selon l'une quelconque des revendications 1 à 21, **caractérisé en ce que** la couche de base (B) contient comme pigment blanc du dioxyde de titane ou du sulfate de baryum.

23. Film polyester selon l'une quelconque des revendications 1 à 22, **caractérisé en ce que** la couche de base (B) contient comme polymère non miscible avec le polyester un copolymère cyclooléfine.

24. Film polyester selon l'une quelconque des revendications 1 à 23, **caractérisé en ce que** le degré de blanc du film est supérieur à 60 et la transparence du film est inférieure à 60%.

25. Procédé de fabrication d'un film polyester selon l'une quelconque des revendications 1 à 24 comprenant les étapes :

    a) de fabrication d'un film à plusieurs couches par coextrusion et laminage à chaud des fontes en films plats de fonte,
    b) d'étirage biaxial du film, et
    c) de thermofixation du film étiré.

26. Utilisation d'un film polyester selon l'une quelconque des revendications 1 à 24 comme matériau d'emballage pour des produits alimentaires et des produits stimulants ou comme feuille de revêtement pour des barquettes alimentaires en APET/CPET ou CPET.

Peelfähige PET-Folie

Siegelbare Deckschicht (A)

Fertiggericht

CPET-tray

## Fig. 1   Menüschale (tray) aus CPET mit Fertiggericht und von Menüschale abziehbare (peelfähige) Folie

PET-Folie

Deckschicht (A)

CPET-Streifen

## Fig. 2   Anordnung von "peelfähiger" Folie und Streifen einer CPET Menüschale im Zug-Dehnungs-Messgerät

**Fig. 3a** Reiss-Dehnungsdiagramm einer Folie mit "weldable" Verhalten

**Fig. 3b** Reiss-Dehnungsdiagramm einer Folie mit "peelable" Verhalten

**Fig. 4** Reiss-Dehnungs-Verhalten von Folien mit "weldable" und "peelable" Verhalten

**Fig. 5** Zusammenhang zwischen Siegeltemperatur in °C und Peelkraft in N/15mm